(19) Europäisches Patentamt / European Patent Office / Office européen des brevets

(11) **EP 3 457 016 B1**

(12) **FASCICULE DE BREVET EUROPEEN**

(45) Date de publication et mention de la délivrance du brevet:
**10.11.2021 Bulletin 2021/45**

(21) Numéro de dépôt: **18194412.5**

(22) Date de dépôt: **14.09.2018**

(51) Int Cl.:
*F16L 37/35* (2006.01)     *B67D 7/00* (2010.01)
*F16K 1/00* (2006.01)      *F16L 37/23* (2006.01)
*F16L 55/10* (2006.01)     *B60K 15/00* (2006.01)
*B67D 7/54* (2010.01)      *F16L 37/22* (2006.01)

(54) **COUPE-CIRCUIT ET INSTALLATION DE MANUTENTION DE FLUIDE SOUS PRESSION COMPRENANT UN TEL COUPE-CIRCUIT**

SICHERHEITSSCHALTER UND ANLAGE ZUR HANDHABUNG EINES FLUIDS UNTER DRUCK, DIE EINEN SOLCHEN SICHERHEITSSCHALTER UMFASST

CIRCUIT BREAKER AND INSTALLATION FOR HANDLING PRESSURISED FLUID COMPRISING SUCH A CIRCUIT BREAKER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.09.2017 FR 1758573**

(43) Date de publication de la demande:
**20.03.2019 Bulletin 2019/12**

(73) Titulaire: **Staubli Faverges**
**74210 Faverges-Seythenex (FR)**

(72) Inventeurs:
- **TIBERGHIEN, Alain-Christophe**
  **74320 Sevrier (FR)**
- **PASTORE, Olivier**
  **73400 Ugine (FR)**

(74) Mandataire: **Lavoix**
**62, rue de Bonnel**
**69448 Lyon Cedex 03 (FR)**

(56) Documents cités:
EP-A1- 0 707 171     EP-A1- 0 900 966
WO-A1-2017/099084    US-A- 4 398 561
US-A1- 2016 290 543

**Description**

L'invention a trait à un coupe-circuit, dit « de sécurité », pour une installation de manutention de fluide sous pression tel que, par exemple, une installation de remplissage d'un réservoir de véhicule automobile avec de l'hydrogène sous pression.

Pour éviter que le temps de remplissage d'un réservoir de véhicule automobile avec de l'hydrogène sous pression ne soit trop long, il est connu d'utiliser une pression de remplissage importante, pouvant aller jusqu'à 875 bars. Compte tenu de ce niveau de pression, la connexion entre la source d'hydrogène et le réservoir du véhicule doit être étanche.

On ne peut pas exclure un déplacement intempestif du réservoir du véhicule automobile en cours de remplissage, un tel déplacement pouvant résulter d'une mauvaise immobilisation du véhicule ou d'une fausse manœuvre de la part de l'utilisateur. Un tel déplacement ne doit pas induire une altération ou une mise à l'air libre de la canalisation reliant la source d'hydrogène sous pression au réservoir du véhicule.

Des problèmes analogues se posent dans d'autres installations de manutention de fluide sous pression, notamment une installation de remplissage d'un réservoir de véhicule automobile avec du méthane sous pression.

Pour répondre à cette problématique, il est connu de EP-A-0 900 966 d'intercaler, dans une canalisation de circulation de fluide sous pression, un coupe-circuit qui comprend un élément mâle relié à une première portion de canalisation et un élément femelle relié à une deuxième portion de canalisation, ces éléments mâle et femelle étant destinés à s'emmancher l'un dans l'autre et à être verrouillés par des billes montées sur l'élément femelle et reçues dans une encoche périphérique de l'élément mâle. Ces billes sont reçues dans des logements ménagés dans un tiroir mobile axialement par rapport au corps femelle et repoussé vers l'arrière du corps femelle par un ressort. Ce rappel élastique est compatible avec le mouvement de retrait du corps mâle en cas de désaccouplement d'urgence. Lorsqu'il convient de ré-emmancher les éléments mâle et femelle l'un dans l'autre, après un désaccouplement, le tiroir doit être repoussé à l'encontre de l'effort axial exercé par le ressort. Cette manœuvre du tiroir nécessite d'avoir recours à un outil dédié, puis de constituer un sous-ensemble en verrouillant une première partie de l'élément femelle sur l'élément mâle du coupe-circuit, avant de visser une deuxième partie de l'élément femelle sur le sous-ensemble précédemment constitué. Cette manœuvre, relativement complexe et peu intuitive, requiert de l'utilisateur de maîtriser l'utilisation de l'outil précité. En outre, l'effort élastique de rappel du tiroir vers la configuration où il repousse les billes pour que celles-ci assurent leur fonction de verrouillage doit tenir compte des frottements exercés sur le corps de l'élément mâle, lors du vissage des deux parties de l'élément femelle l'une sur l'autre. Enfin, ce matériel connu nécessite un nombre important de pièces, dont deux séries de billes et un ressort relativement volumineux. Ce coupe-circuit est donc relativement onéreux et encombrant.

C'est à ces inconvénients qu'entend plus particulièrement remédier l'invention en proposant un nouveau coupe-circuit qui est plus simple, plus compact et plus facile à manœuvrer que les matériels connus.

A cet effet, l'invention concerne un coupe-circuit pour le raccordement de deux tronçons de canalisation d'une installation de manutention de fluide sous pression, ce coupe-circuit comprenant un élément mâle et un élément femelle destinés à s'emmancher l'un dans l'autre selon un axe d'emmanchement. L'élément mâle comprend un corps mâle définissant un premier conduit interne de circulation de fluide sous pression, ce corps mâle étant pourvu d'au moins un organe d'obturation d'une extrémité avant du premier conduit interne le long de l'axe d'emmanchement, d'au moins un premier passage, radial à l'axe d'emmanchement et reliant le premier conduit interne à l'extérieur du corps mâle en configuration désaccouplée des éléments mâle et femelle du coupe-circuit, d'une soupape, mobile dans le premier conduit interne, et d'une encoche de verrouillage ménagée sur le corps mâle. L'élément femelle comprend un corps femelle définissant un deuxième conduit interne de circulation de fluide sous pression et pourvu d'au moins un deuxième passage, radial à l'axe d'emmanchement et reliant le deuxième conduit à un volume d'accueil du corps mâle dans le corps femelle, ainsi qu'une soupape, mobile dans le deuxième conduit interne. Le corps femelle est également pourvu de plusieurs organes de verrouillage mobiles transversalement à l'axe d'emmanchement dans des logements du corps femelle, entre une première position radiale, où les organes de verrouillage sont engagés dans l'encoche de verrouillage, pour le verrouillage axial des corps mâle et femelle en configuration accouplée des éléments mâle et femelle du coupe-circuit, et une deuxième position radiale, où les organes de verrouillage libèrent le passage du corps mâle dans le corps femelle. En configuration accouplée, les premier et deuxième passages radiaux sont en communication, alors qu'un premier joint d'étanchéité et un deuxième joint d'étanchéité disposés, le long de l'axe d'emmanchement, de part et d'autre des premier et deuxième passages radiaux, coopèrent respectivement radialement avec les corps mâle et femelle. Conformément à l'invention, une bague de rappel élastique est montée sur le corps femelle et entoure les organes de verrouillage, cette bague étant configurée pour rappeler élastiquement les organes de verrouillage vers leur première position radiale en configuration accouplée et pour être déformée radialement, et élastiquement, par les organes de verrouillage lors de leur déplacement, de leur première position radiale vers leur deuxième position radiale.

Grâce à l'invention, le coupe-circuit, qui peut également être dénommé « breakaway », est compatible avec un verrouillage et un déverrouillage automatiques de ses éléments mâle et femelle, grâce à une déformation radiale et centrifuge de la bague élastique, cette déformation résultant du déplacement axial relatif des éléments mâle et femelle. Le verrouillage des éléments mâle et femelle du coupe-circuit, obtenu grâce à un effort radial centripète de la bague élastiquement déformable, est simple et intuitif à mettre en œuvre pour un utilisateur, tout en étant compatible avec les hautes pressions de fluide utilisées dans une installation de manutention de fluide sous pression. Ceci découle, notamment, de la mise en œuvre des premier et deuxième joints d'étanchéité, qui sont disposés de part et d'autre des passages radiaux, dont le passage radial du corps mâle et qui permettent de limiter les effets de la pression sur le corps mâle et donc sur le verrouillage.

Selon des aspects avantageux mais non obligatoires de l'invention, un tel coupe-circuit peut incorporer une ou plusieurs des caractéristiques suivantes, prises toute combinaison techniquement admissible :

-    Le coupe-circuit comprend une tige de manœuvre d'une première soupape parmi la soupape de l'élément mâle et la soupape de l'élément femelle, cette tige traversant un premier corps, formé par le corps mâle ou le corps femelle et logeant la première soupape, avec interposition d'un troisième joint d'étanchéité entre le premier corps et la tige, et étant montée coulissante dans le premier corps selon une direction parallèle à l'axe d'emmanchement, alors que le deuxième corps, parmi le corps mâle et le corps femelle, définit une surface d'appui de la tige, configurée pour pousser la tige vers l'arrière du premier corps, en cours d'emmanchement des éléments mâle et femelle, pour déplacer la première soupape d'une position de fermeture à une position d'ouverture du conduit interne du premier corps.

-    La tige est distincte de la première soupape qu'elle manœuvre.

-    En configuration désaccouplée et en configuration accouplée du coupe-circuit, l'extrémité avant de la tige s'étend, selon l'axe d'emmanchement, vers l'avant au-delà d'une surface du premier corps que la tige traverse.

-    En configuration accouplée, le premier joint d'étanchéité est disposé plus à l'avant du corps femelle que le deuxième joint d'étanchéité, alors qu'une section d'étanchéité entre le deuxième joint d'étanchéité et le corps mâle est égale à la somme d'une section d'étanchéité entre le premier joint et le corps mâle et d'une section d'étanchéité entre le troisième joint d'étanchéité et la tige.

-    Le premier joint d'étanchéité et le deuxième joint d'étanchéité sont chacun reçus dans une gorge périphérique interne du corps femelle et en ce que la tige actionne la soupape de l'élément mâle.

-    Une première distance mesurée axialement entre la surface d'appui et le joint le plus proche de cette surface, parmi le premier joint d'étanchéité et le deuxième joint d'étanchéité est supérieure à une deuxième distance mesurée axialement entre l'extrémité avant de la surface radiale externe du corps mâle et l'extrémité avant de la tige, lorsque la tige est en contact avec la soupape de l'élément mâle sans la séparer de son siège.

-    Le premier joint d'étanchéité et le deuxième joint d'étanchéité sont des joints toriques et, pour chacun des premier et deuxième joints d'étanchéité, le rapport entre, d'une part, le diamètre intérieur de ce joint en configuration désaccouplée du coupe-circuit et, d'autre part, le diamètre de tore de ce joint est inférieur à 2,5, de préférence à 2,2.

-    Entre une première configuration de la bague de rappel élastique en contact avec les organes de verrouillage dans leur première position radiale et une deuxième configuration de la bague de rappel élastique en contact avec les organes de verrouillage dans leur deuxième position radiale, la bague de rappel élastique est retenue axialement dans une rainure ménagée au niveau de la surface radiale externe du corps femelle et délimitée par deux bords axiaux. - La bague de rappel élastique est une bague fendue qui agit sur deux organes de verrouillage mobiles dans deux logements symétriques par rapport à l'axe d'emmanchement.

-    La bague de rappel élastique entoure le corps femelle sur 360°, autour de l'axe d'emmanchement.

-    Les organes de verrouillage sont des billes de verrouillage.

-    Les organes de verrouillage sont reçus dans des logements centrés chacun sur un axe transversal à l'axe d'emmanchement, alors que les axes transversaux des logements convergent en direction de l'avant du corps femelle et qu'un angle entre l'axe d'emmanchement et l'axe transversal de chaque logement, mesuré du côté arrière du logement, est compris entre 60° et 80°, de préférence égal à 70°.

-    L'encoche de verrouillage est délimitée, le long de l'axe d'emmanchement, du côté de la face avant de l'élément mâle, par une première surface tronconique d'une collerette, alors que l'angle d'inclinaison de la première surface tronconique par rapport à l'axe d'emmanchement, mesuré hors de la collerette, est compris entre 140° et 160°, de préférence égal à 150°.

-    Le corps mâle est pourvu d'une première encoche externe, alors que le corps femelle est pourvu d'au moins une deuxième encoche externe et que ces deux encoches externes sont configurées pour recevoir chacune une partie d'un outil d'assistance à l'emmanchement des éléments mâle et femelle l'un dans l'autre.

-    En configuration accouplée des éléments mâle et femelle, , le corps femelle constitue une surface de butée axiale au corps mâle, dans le sens d'emmanchement.

Selon un deuxième aspect, l'invention concerne une installation de manutention de fluide sous pression qui comprend une source de fluide sous pression ainsi qu'une première partie d'un raccord destinée à être accouplée à une deuxième partie de raccord reliée à un volume de stockage ou d'utilisation de ce fluide, la première partie du raccord étant reliée fluidiquement à la source par une canalisation. Conformément à l'invention, un coupe-circuit tel que mentionné ci-dessus est relié fluidiquement à la source, par un premier tronçon de la canalisation, et à la première partie du raccord, par un deuxième tronçon de la canalisation.

Grâce à l'invention, cette installation est plus simple à fabriquer et plus facile à utiliser que les installations connues.

De façon avantageuse, le coupe-circuit comprend une tige de manœuvre de la première soupape parmi la soupape de l'élément mâle du coupe-circuit et l'autre soupape de son élément femelle, cette tige est montée coulissante dans un premier corps formé par le corps mâle ou le corps femelle et logeant la première soupape, selon une direction parallèle à l'axe d'emmanchement, avec interposition d'un troisième joint d'étanchéité entre le premier corps et cette tige, alors que l'élément du coupe-circuit équipé de cette tige est relié fluidiquement à la source de fluide sous pression, par le premier tronçon de canalisation.

L'invention sera mieux comprise et d'autres avantages de celle-ci apparaitront plus clairement à la lumière de la description qui va suivre de deux modes de réalisation d'un coupe-circuit et d'une installation conformes à son principe, unique à titre d'exemple et faite en référence aux dessins annexés dans lesquels :

- la figure 1 est une coupe longitudinale de principe d'un élément mâle d'un coupe-circuit conforme à l'invention, cet élément mâle étant raccordé à une source de fluide sous pression ;
- la figure 2 est une vue à plus grande échelle du détail II à la figure 1 ;
- la figure 3 est une coupe longitudinale d'un élément femelle du même coupe-circuit ;
- la figure 4 est une vue à plus grande échelle du détail IV à la figure 3 ;
- la figure 5 est une coupe longitudinale du coupe-circuit en cours d'accouplement ;
- la figure 6 est une coupe longitudinale selon la ligne VI-VI à la figure 5 ;
- la figure 7 est une coupe transversale selon la ligne VII-VII à la figure 5 ;
- la figure 8 est une vue de côté du coupe-circuit en cours d'accouplement ;
- la figure 9 est une coupe longitudinale analogue à la figure 5, lorsque le coupe-circuit est en configuration accouplée, avec son élément femelle raccordé à un réservoir de véhicule automobile constituant un volume de stockage de fluide.
- la figure 10 est une coupe transversale selon la ligne X-X à la figure 9 ;
- la figure 11 est une coupe transversale selon la ligne XI-XI à la figure 9 ;
- la figure 12 est une coupe longitudinale, analogue à la figure 5, d'un coupe-circuit conforme à un deuxième mode de réalisation, en cours d'accouplement
- la figure 13 est une coupe transversale selon la ligne XIII-XIII à la figure 11 ;
- la figure 14 est une coupe longitudinale du coupe-circuit des figures 12 et 13 en configuration accouplée ; et
- la figure 15 est une coupe transversale à la ligne XV-XV à la figure 14.

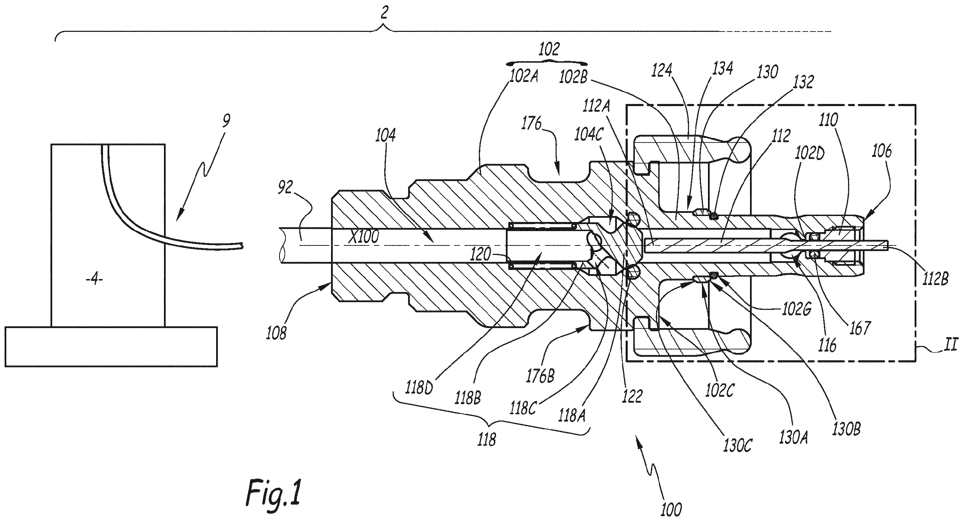

Une installation 2 de manutention de fluide sous pression est représentée aux figures 1 à 11. Elle comprend une borne 4 qui forme une source de fluide sous pression ainsi qu'un pistolet 62 qui constitue une première partie d'un raccord 6 dont la partie complémentaire 64 est montée sur un véhicule automobile 8 qui comprend un réservoir embarqué 82 de stockage du fluide sous pression et qui peut être accouplée au pistolet 62. Une canalisation 9 relie la borne 4 au pistolet 62. Un coupe-circuit de sécurité 10 est intercalé le long de la canalisation 9 et divise celle-ci entre un premier tronçon amont 92, qui s'étend entre la borne 4 et le coupe-circuit 10, et un deuxième tronçon aval 94, qui s'étend entre ce coupe-circuit 10 et le pistolet 62.

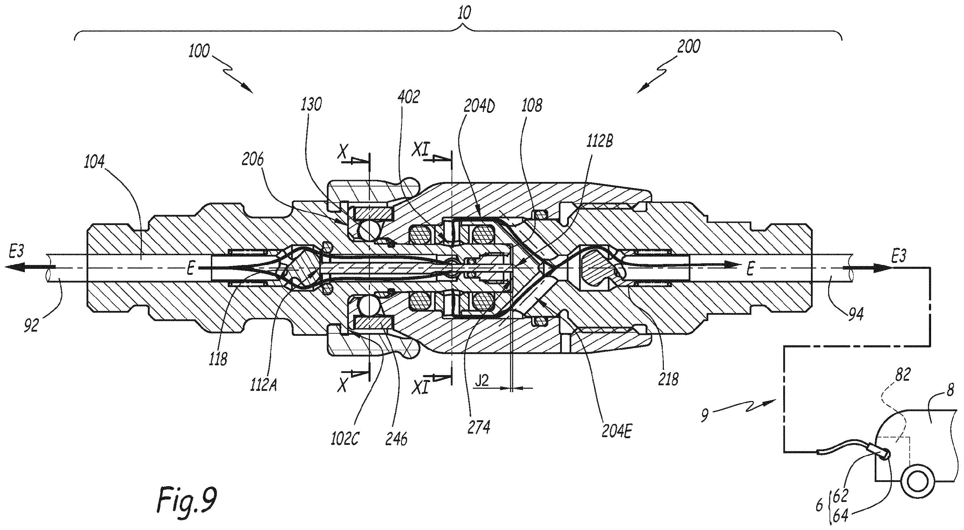

Pour la clarté du dessin, les éléments 4 et 62 de l'installation 2 sont représentés, respectivement, uniquement aux figures 1 et 9.

Le coupe-circuit 10 comprend un élément mâle 100 et un élément femelle 200.

L'élément mâle 100 s'étend le long d'un axe longitudinal X100 et comprend un corps 102 tubulaire composé d'une partie arrière 102A et d'une partie avant 102B.

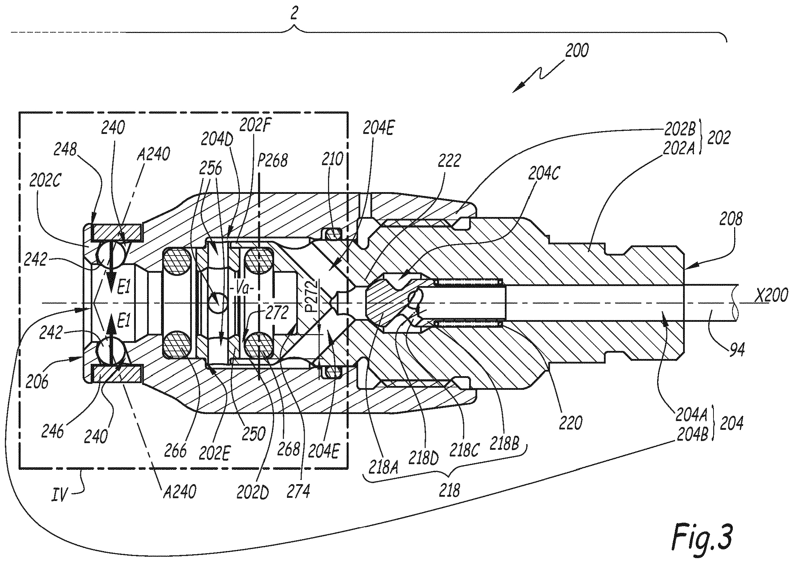

Au sens de la présente invention, l'avant d'un élément du coupe-circuit 10 est la partie de cet élément tournée vers l'autre élément du coupe-circuit 10 lorsque ces éléments sont mis en regard l'un de l'autre en vue de leur emmanchement. Ainsi, l'avant de l'élément mâle 100 est orienté vers la droite à la figure 1, alors que l'avant de l'élément femelle 200 est orienté vers la gauche à la figure 3. L'arrière d'un élément du raccord est orienté à l'opposé de l'avant de cet élément.

Le corps 102 est représenté monobloc sur les figures. Il peut toutefois être composé de plusieurs parties assemblées, notamment par vissage. Le corps 102 est pourvu d'une surface 102C, qui est axiale, c'est-à-dire perpendiculaire à l'axe X100. La partie 102A est située en arrière de la surface 102C, le long de l'axe X100, alors que la partie 102B est située en avant de cette surface, le long de cet axe.

Un alésage central 104 s'étend sur toute la longueur de l'élément mâle 100, entre sa face avant 106, qui est de forme annulaire, plane et perpendiculaire à l'axe X100, et sa face arrière 108, qui est également annulaire, plane et perpendiculaire à l'axe X100. Une extrémité du tronçon de canalisation 92 est fixée à l'arrière du corps mâle 102 et communique avec l'alésage central 104. On note 104B l'extrémité avant de l'alésage central 104. Un bouchon 110 est vissé dans cette extrémité 104B et est traversé par une tige 112 qui dépasse au-delà de la face avant 106, à l'extérieur du corps 102. Le bouchon 110 fait partie du corps 102. On note 110B la face avant du bouchon 110 qui est en permanence traversée par la tige 112.

Par l'« extérieur » du corps mâle 102, on entend le volume entourant le corps mâle 102. Ainsi la tige 112 n'est pas entièrement incluse dans le corps 102.

On note 112A l'extrémité arrière de la tige 112, qui est disposée dans l'alésage 104, et 112B son extrémité avant, qui est disposée à l'extérieur du corps 102. La tige 112 est formée par un corps cylindrique à section circulaire pleine, qui présente un premier diamètre Φ1 au niveau de son extrémité 112A et un deuxième diamètre Φ2, strictement inférieur au diamètre Φ1, au niveau de son extrémité avant 112B. La tige 112 comprend une zone de transition 112C disposée dans l'alésage 104, en arrière du bouchon 110, au niveau de laquelle a lieu la transition entre les diamètres Φ1 et Φ2.

Le corps 102 est pourvu, le long de l'alésage 104, d'une partie rétrécie 102D qui présente un diamètre intérieur légèrement supérieur au diamètre Φ1.

La portion de la tige 112 située entre la partie 112C et son extrémité avant 112B traverse le bouchon 110 qui est pourvu, à cet effet, d'un alésage central 110A qui constitue un palier de guidage en coulissement de la tige 12 à l'intérieur du bouchon 110, le long de l'axe X100.

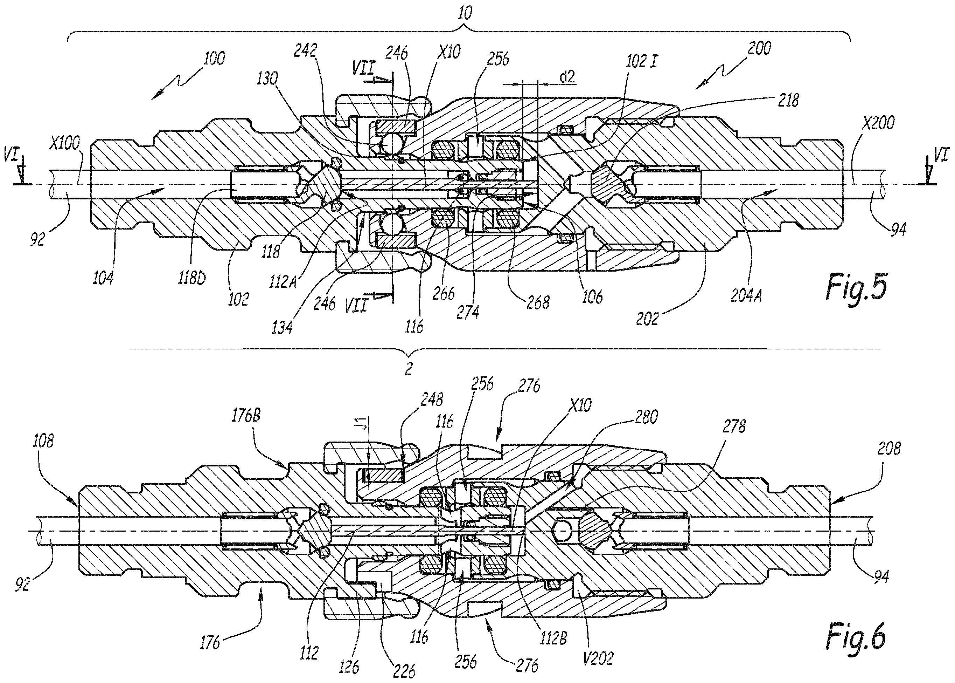

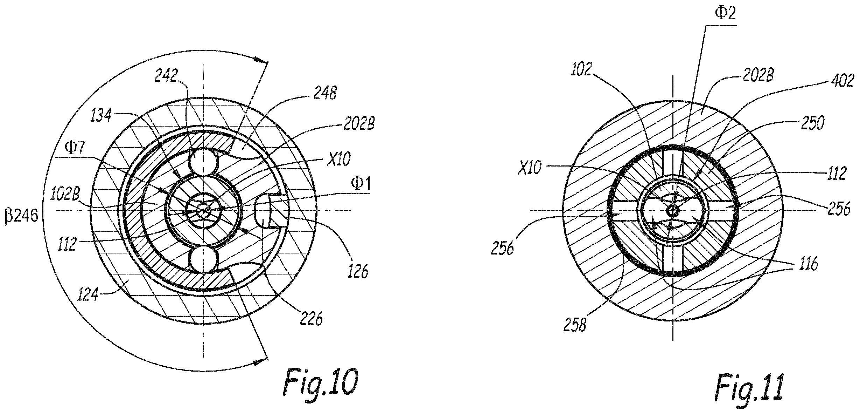

Au voisinage de la partie 112C, l'élément mâle 100 est pourvu de deux passages radiaux 116 qui relient l'alésage 104 à l'extérieur du corps 102 lorsque l'élément mâle 100 est en configuration désaccouplée. Un seul de ces passages radiaux 116 est visible sur la figure 1. Les deux passages radiaux sont visibles à la figure 6, respectivement au-dessus et en-dessous de la tige 112, ainsi qu'à la figure 11, respectivement à gauche et à droite de cette tige.

L'alésage 104 comprend une partie élargie 104C, dont le diamètre est supérieur à celui du reste de l'alésage 104.

Une soupape 118 est logée dans l'alésage 104, partiellement au niveau de la partie élargie 104C, en arrière des passages radiaux 116, et comprend une tête pleine 118A et un corps cylindrique 118B qui présente une surface externe étagée, avec un diamètre qui diminue en direction de la face arrière 108 de l'élément mâle 100. Des passages inclinés 118C relient un évidement central 118D du corps cylindrique 118B avec la surface externe de ce corps, en arrière de la tête pleine 118A. Un ressort 120 intercalé, radialement à l'axe X100, entre le corps cylindrique 118B et le corps 102, repousse par défaut la soupape 118 en appui contre un siège 122 formé par un joint torique monté sur le corps mâle 102, à l'intérieur de l'alésage 104. Ainsi, en configuration désaccouplée du coupe-circuit, la portion de l'alésage central 104 située en arrière de la soupape 118 est obturée par la soupape 118.

En pratique, le ressort 120 est logé radialement entre la partie du corps cylindrique 118B de plus petit diamètre et le corps 102. Le diamètre maximal du corps cylindrique 118B est égal au diamètre interne de l'alésage central 104, en arrière de sa partie élargie 104C, de sorte que la soupape 118 est guidée en translation parallèle à l'axe X100 à l'intérieur de l'alésage 104.

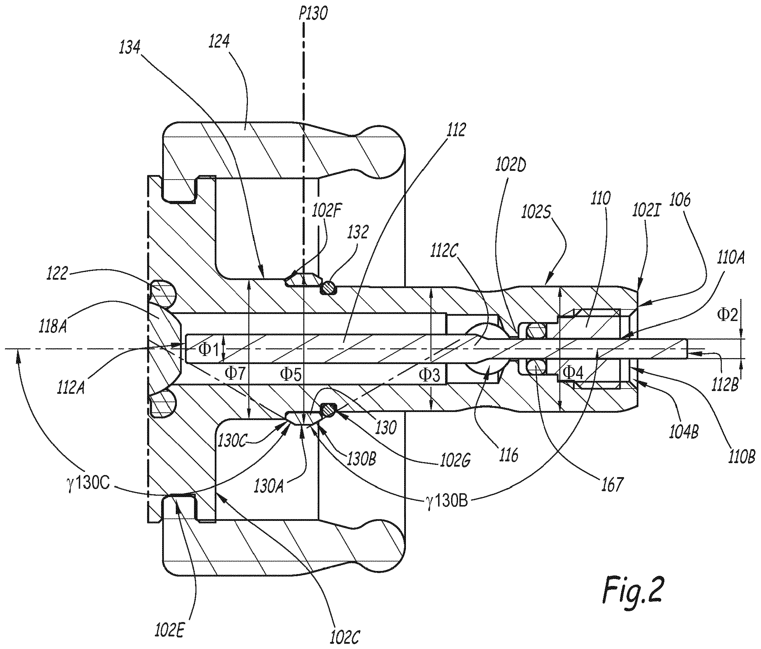

En configuration désaccouplée représentée aux figures 1 et 2, l'extrémité arrière 112A de la tige 112 est disposée en regard de la tête 118A. La tige 112 est distincte de la soupape 118. Autrement dit, la tige 112 et la soupape 118 sont formées par deux pièces différentes aptes à venir en contact l'une avec l'autre. La portion de la tige 112 de diamètre Φ1 et la partie rétrécie 102D sont maintenues axialement entre la tête pleine 118A et la zone de transition 112C.

La partie avant 102B du corps 102 est de forme tubulaire, avec une surface extérieure circulaire, de diamètre variable le long de l'axe X100. Plus précisément, la partie avant 102B présente deux surfaces radiales externes de diamètres Φ3 et Φ4 différents, de part et d'autre des passages radiaux 116. Le diamètre Φ3 est le diamètre extérieur de la partie avant 102B, en arrière des passages radiaux 116. Le diamètre Φ4 est le diamètre extérieur de la partie 102B en avant des passages radiaux 116, c'est-à-dire entre ces passages radiaux et la face avant 106 de l'élément mâle 100, avec laquelle le joint d'étanchéité 268 coopère en configuration accouplée du coupe circuit. On note 102S la surface radiale externe de la partie 102B, qui s'étend en avant des passages radiaux 116.

Les diamètres Φ2, Φ3 et Φ4 sont choisis de telle sorte que la relation suivante est vérifiée :

$$\Phi 2^2 + \Phi 3^2 = \Phi 4^2 \qquad \text{(Equation 1)}$$

Un protecteur déformable 124, de préférence réalisé en matériau synthétique est monté sur le corps 102 en étant engagé dans une gorge périphérique externe 102E ménagée sur la partie arrière 102A du corps 102. Ce protecteur 124 s'étend, à partir de la gorge 102E, vers l'avant de l'élément 100 et entoure la partie avant 102B, sur une partie de sa longueur axiale.

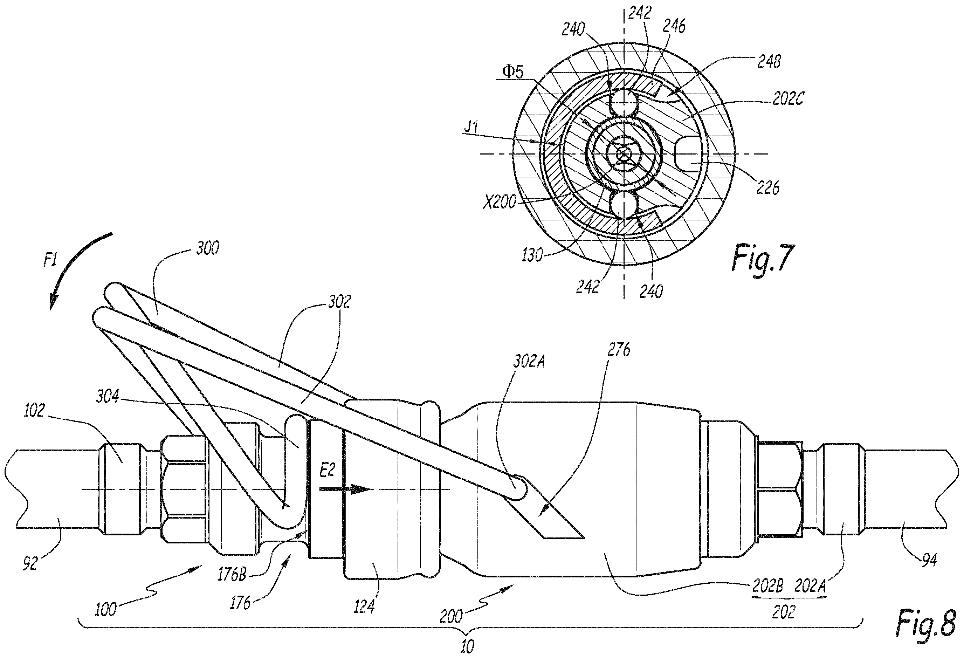

Un doigt 126 d'indexage du corps male 102 s'étend en saillie vers l'avant à partir de la surface 102C, radialement entre la partie avant 102B du corps 102 et le protecteur 124. Ce doigt d'indexage 126 est visible aux figures 6 et 7 notamment.

Une collerette 130 est rapportée sur la surface périphérique externe de la partie avant 102B du corps 102 en étant bloquée axialement sur cette partie avant entre un épaulement 102F de la partie avant et un segment d'arrêt 132 formé par un circlip engagé dans une gorge périphérique externe 102G de la partie avant.

En pratique, la collerette 130 est formée par une bague réalisée dans un matériau dont la dureté est supérieure à celle du matériau utilisé pour constituer le corps mâle 102 ou, lorsque ce corps est formé de plusieurs parties, la partie avant 102B de ce corps 102. Le matériau du corps 102 est, quant à lui, choisi compatible avec le ou les gaz devant transiter à travers l'élément mâle 100, dans l'exemple de l'hydrogène. La dureté du matériau de la collerette 130 et la dureté du matériau du corps 102 sont, par exemple, mesurées selon la mesure de dureté Vickers.

En section transversale représentée à la figure 1, la collerette 130 a une forme externe en double biseaux qui convergent en s'éloignant de l'axe X100, avec une partie intermédiaire cylindrique de diamètre Φ5. En d'autres termes, la surface externe de la collerette 130 présente une surface radiale extérieure cylindrique 130A à section circulaire de diamètre Φ5 et deux surfaces tronconiques avant 130B et arrière 130C de part et d'autre de la surface 130A. Les surfaces 130B et 130C sont symétriques par rapport à un plan médian P130 de la collerette 130. On note $\gamma$130B l'angle d'inclinaison de la surface tronconique et $\gamma$130C l'angle d'inclinaison de la surface tronconique 130C par rapport à l'axe longitudinal X100, ces angles $\gamma$130B et $\gamma$130C étant mesurés hors de la collerette 130. Ces angles sont choisis entre 140° et 160°, de préférence égaux à 150°. Les valeurs des angles $\gamma$130 sont sélectionnées en fonction de la direction sur laquelle est centré un logement de réception d'un ou des organes de verrouillage prévu sur l'élément femelle, ainsi qu'il ressort des explications qui suivent. Dans l'exemple des figures, les angles $\gamma$130B et $\gamma$130C ont la même valeur. En variante, l'angle $\gamma$130B est supérieur à l'angle $\gamma$130C.

Une encoche de verrouillage 134 est délimitée par la surface périphérique radiale externe de la partie avant 102B du corps 102, axialement entre la surface 102C et la surface 130A de la collerette 130. Cette encoche de verrouillage 134 présente, au niveau de la surface périphérique externe de la partie avant 102B, un diamètre Φ7 inférieur au diamètre Φ5.

L'élément femelle 200 comprend un corps 202 qui est formé d'une partie interne 202A et d'une partie externe 202B vissée sur la partie 202A avec interposition d'un joint d'étanchéité 210. Même si cela n'est pas représenté sur les figures, chacune des parties 202A et 202B du corps 202 peut être réalisée par plusieurs parties assemblées, notamment par vissage. Le corps 202 est centré sur un axe longitudinal X200 de l'élément femelle 200 qui est destiné à être aligné avec l'axe X100 de l'élément mâle 100 en cours d'emmanchement et en configuration accouplée des éléments 100 et 200. Lorsque les axes X100 et X200 sont alignés, ils définissent ensembles un axe d'emmanchement X10 du coupe-circuit 10.

Le corps 202 est pourvu d'un alésage central 204 qui s'étend globalement selon une direction parallèle à l'axe X200 et qui comprend une portion arrière 204A définie dans la partie interne 202A et une portion ou extrémité avant 204B définie dans la partie externe 202B. Une extrémité du tronçon de canalisation 94 est fixée à l'arrière du corps femelle 202 et communique avec la portion arrière 204A, comme visible à la figure 9.

On note respectivement 206 et 208 les faces avant et arrière de l'élément femelle 200.

Une portion avant 202C de la partie externe 202B est équipée de deux logements 240 qui la traversent, transversalement à l'axe X200, de part en part et qui sont chacun centrés sur un axe transversal A240. Les deux axes A240 convergent en direction de l'avant du corps 202. On note $\alpha$240 l'angle entre l'axe X200, c'est-à-dire l'axe X10 en cours d'emmanchement et en configuration accouplée, et l'axe A240 d'un logement 240, l'angle $\alpha$240 étant mesuré du côté arrière du logement 240. La valeur d'un angle $\alpha$240 est comprise entre 60° et 80°, de préférence égale à 70°.

Les deux logements 240 sont symétriques par rapport à l'axe X200 et accueillent chacun une bille de verrouillage 242. Les dimensions de chaque logement 240 transversales à l'axe A240 sont choisies en fonction du diamètre des billes 242 pour être compatibles avec un déplacement des billes transversal à l'axe X10 selon les axes A240, entre une position radiale interne et une position radiale externe. Les logements se rétrécissent vers l'intérieur du corps 202, c'est-à-dire en direction de l'axe X200, afin d'éviter que les billes 242 ne tombent dans la portion avant 204B de l'alésage 204.

Les valeurs respectives des angles $\gamma$130B, $\gamma$130C et $\alpha$240 sont choisies les unes en fonction des autres. Plus précisément, il est préférable pour un déplacement des billes 242 sans coincement dans le logement 240 au désaccouplement que :

$$\alpha240 + \gamma130C \geq 200° \qquad\qquad \text{(Equation 2)}$$

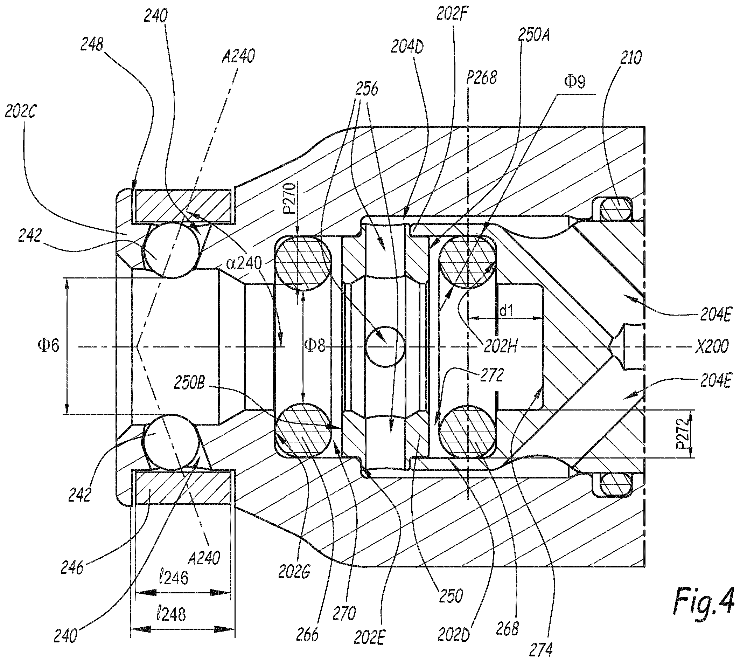

Une bague 246 élastiquement déformable est reçue dans une rainure externe 248 ménagée sur la surface radiale externe de la portion avant 202C du corps 202. La rainure 248 délimite un bord avant et un bord arrière qui s'étendent dans la direction radiale à l'axe X200. Tous les logements 240 débouchent dans la rainure 248. La bague élastiquement déformable 246 entoure tous les logements 240 et est en contact avec toutes les billes 242 sur lesquelles elle exerce un effort centripète E1 dirigé vers l'axe X200. En effet, le diamètre interne de la bague 246, au repos et non montée sur le corps femelle 202, est inférieur au plus grand diamètre d'une surface cylindrique imaginaire centrée sur l'axe X200 et tangente aux billes 242 en position radiale interne. Préférentiellement, cette bague 246 est en acier. Comme cela ressort, notamment des figures 3 et 4, la bague 246 est à section rectangulaire dans un plan radial à l'axe X200.

Comme cela ressort notamment de la figure 7 et de la figure 10, la rainure 248 s'étend sur une partie seulement de la périphérie de la portion 202C et la bague 246 est une bague fendue , qui s'étend, autour de l'axe X200, sur un secteur angulaire dont l'angle β246 est adapté à la position des logements 240 et des billes 242, d'une part, et la géométrie de la rainure 248, d'autre part. Dans l'exemple où les logements 240 sont symétriques par rapport à l'axe X200, la valeur de l'angle β246 en configuration rétractée de la bague 246 montée autour des billes 242 peut être choisie entre 210° et 240°, de préférence égale à 225°. L'angle β246 est choisi supérieur à l'angle d'un secteur angulaire couvrant l'ensemble des logements 240 et de manière que la bague 246 en configuration élargie couvre l'ensemble des logements 240.

Le fait que la rainure externe 248 ne s'étend que sur une partie de la circonférence de la portion avant 202C permet de bloquer la bague 246 en rotation autour de l'axe X200 et d'assurer le contact entre cette bague 246 et les billes 242 dans toutes les configurations d'utilisation du coupe-circuit 10.

La largeur ℓ248 de la rainure 248 mesurée parallèlement à l'axe X200 entre le bord avant et le bord arrière est égale ou légèrement supérieure, à 10% près, à la largeur ℓ246 de la bague 246 mesurée parallèlement à l'axe X200. La rainure 248 permet d'assurer un guidage efficace du mouvement de la bague 246, dans une direction radiale à l'axe X200, et une retenue de la bague 246 dans le corps femelle 202 selon l'axe X200, en configuration désaccouplée de l'élément femelle, en configuration accouplée des éléments mâle et femelle, et lorsque la bague 246 s'élargit ou se rétracte radialement à l'axe X200, comme expliqué ci-après.

On note Φ6 le plus petit diamètre d'une surface cylindrique imaginaire centrée sur l'axe X200 et tangente aux billes 242 en configuration désaccouplée des éléments mâle 100 et femelle 200, c'est-à-dire lorsque les billes 242 sont repoussées par la bague élastiquement déformable 246 en direction de l'axe X200, en position radiale interne.

Le diamètre Φ6 est inférieur au diamètre Φ5, d'au moins 10%. En d'autres termes, le diamètre externe maximal Φ5 de la collerette 130 de l'élément mâle 100 est supérieur au diamètre de la surface cylindrique imaginaire définie entre les deux billes de verrouillage 242 en position radiale interne, avec la bague élastiquement déformable 246 dans une configuration rétractée où elle repousse les billes de verrouillage 242 vers l'axe X200.

D'autre part, le diamètre Φ6 est strictement supérieur aux diamètres Φ3 et Φ4.

En outre, le diamètre externe Φ7 de la partie avant 102B du corps 102 au niveau de l'encoche 134 est sensiblement égal au diamètre Φ6.

Le corps 202 comprend une bague de butée 250. La bague de butée 250 est intercalée axialement, le long de l'axe X200, entre la portion avant 202C de la partie externe 202B et une portion avant 202D de la partie interne 202A du corps 202. En pratique, la partie interne 202A est vissée dans l'alésage central de la partie interne 202B, alors que la bague de butée 250 est immobilisée axialement entre un épaulement 202E de la partie externe 202B et un bord avant 202F de la portion interne 202A. Cette bague de butée 250 est pourvue de quatre passages radiaux 256, répartis à 90° autour de l'axe X200. Le volume intérieur de la bague de butée 250 est un volume d'accueil Va du corps mâle 102. Les passages radiaux 256 communiquent avec l'extérieur de l'élément femelle 200 au niveau du volume d'accueil Va quand l'élément femelle 200 est en configuration désaccouplée.

Un espace annulaire 204D est formé autour de la bague de butée 250 et de la portion avant 202D de la partie interne 202A, à l'intérieur de la partie externe 202B du corps 202. Cet espace annulaire 204D est en communication avec deux passages inclinés 204E ménagés dans la partie arrière 202B et qui relient l'espace annulaire 204D à la portion arrière 204A de l'alésage central 204 dans lequel est disposée une soupape 218. Les volumes 204D et 204E font partie de l'alésage central 204. La soupape 218 comprend, comme la soupape 118, une tête pleine 218A, un corps cylindrique et étagé 218B, des passages inclinés 218C et un évidement central 218D. Un ressort 220 repousse par défaut la soupape 218 contre un siège 222 ménagé dans la partie interne 202A du corps 202. Comme dans l'élément mâle 100, la soupape 218 est disposée dans une partie élargie 204C de l'alésage 204, de diamètre plus important que la portion arrière 204A de cet alésage. Les passages radiaux 256, l'espace annulaire 204D, les passages inclinés 204E et les passages inclinés 218C de la soupape 218 et la portion arrière 204A communiquent lorsque la soupape 218 est décalée de son siège 222 et forment un conduit interne de circulation du fluide dans le corps femelle 202.

Un premier joint torique 266 d'étanchéité est logé dans la portion avant 204B de l'alésage central 204, dans la partie externe 202B du corps 202, axialement entre la face avant 206 et la bague de butée 250. Un deuxième joint torique 268 d'étanchéité est disposé de l'autre côté de la bague de butée 250, c'est-à-dire axialement entre cette bague 250 et la soupape 218.

Les joints d'étanchéité 266 et 268 sont identiques. Ils sont réalisés en élastomère et l'on note Φ8 leur diamètre intérieur et Φ9 leur diamètre de tore, ces diamètres étant mesurés en configuration désaccouplée des éléments mâle et femelle 100 et 200, c'est-à-dire lorsque les joints toriques d'étanchéité 266 et 268 ne sont pas contraints par la partie avant 102B du corps 102.

En configuration désaccouplée des éléments mâle 100 et femelle 200, les joints 266 et 268 d'étanchéité sont découverts, c'est-à-dire accessibles radialement par l'intérieur du corps 202 depuis le volume d'accueil Va.

Le joint torique d'étanchéité 266 est reçu dans un logement 270 ménagé à l'intérieur de la partie externe 202B du corps 202, défini axialement entre un épaulement 202G de ce corps, une face avant 250B de la bague de butée 250 et délimité par un fond radial externe ménagé sur une surface radiale interne de la partie avant 202B du corps 202. Ce logement 270 est en forme de gorge périphérique interne centrée sur l'axe X200 et l'on note P270 sa profondeur radiale, c'est-à-dire la distance entre son fond radial externe et son bord radial interne. Cette profondeur P270 a une valeur comprise entre 75 et 88% du diamètre $\Phi 9$, de préférence égale à 85% de ce diamètre.

De même, le deuxième joint torique d'étanchéité 268 est disposé dans un logement 272, en forme de gorge périphérique interne centrée sur l'axe X200, défini axialement entre un épaulement 202H de la partie interne 202A du corps 202 et une face arrière 250A de la bague de butée 250 et délimité par un fond radial externe ménagé sur une surface radiale interne de la partie arrière 202A du corps 202. On note P272 la profondeur radiale de ce logement 272, définie comme la profondeur P270. La profondeur P272 a une valeur comprise entre 75 et 88% du diamètre $\Phi 9$, de préférence égale à 85% de ce diamètre.

Par ailleurs, le rapport $\Phi 8 / \Phi 9$ est sélectionné avec une valeur inférieure à 2,5, de préférence inférieure à 2,2, de préférence encore de l'ordre de 2,14 en configuration désaccouplée des éléments mâle 100 et femelle 200.

Chacun des premier et deuxième joints d'étanchéité 266 et 268 a, de préférence, une dureté supérieure à 85 Shore, de préférence supérieure à 90 Shore, étant précisé que ces joints peuvent être réalisés en polyuréthane.

La partie intérieure 202A du corps 202 est pourvue d'une surface axiale 274, en forme de disque, perpendiculaire à l'axe X200 et centrée sur celui-ci, disposée en arrière des passages radiaux 256 et des joints d'étanchéité 266 et 268. Le joint d'étanchéité 268 est le plus proche de la surface 274. Cette surface 274 est destinée à recevoir un appui l'extrémité avant 112B de la tige 112 en cours d'emmanchement et en configuration accouplée des éléments mâle 100 et femelle 200. On note d1 la distance axiale, mesurée parallèlement à l'axe X200 entre, d'une part, la surface 274 et, d'autre part, un plan P268 médian au joint 268, perpendiculaire à l'axe X200 et passant par le centre de ce joint lorsqu'il est en appui contre l'épaulement 202H, en configuration désaccouplée des éléments mâle 100 et femelle 200.

D'autre part, le corps 202 comprend une rainure longitudinale 226 de réception du doigt d'indexage 126. Ainsi, la rainure 226 coopère avec le doigt d'indexage 126 pour l'indexage en rotation des corps 102 et 202 autour de l'axe d'emmanchement X10, lorsque les éléments mâle 100 et femelle 200 sont en cours d'emmanchement ou en configuration accouplée.

Pour procéder à l'emmanchement des éléments mâle 100 et femelle 200 l'un dans l'autre, on aligne les axes X100 et X200 sur l'axe d'emmanchement X10 et on oriente les corps 102 et 202 autour de cet axe d'emmanchement X10 de façon à disposer le doigt d'indexage 126 en regard de la rainure d'indexage 226. On rapproche alors les corps mâle 102 et femelle 202 en translation axiale, le long de l'axe X10. Ceci a pour effet d'introduire la partie avant 102B du corps 102 dans la portion avant 204B de l'alésage 204. Du fait de ce mouvement, la surface périphérique externe de la partie avant 102B vient au contact du premier joint torique d'étanchéité 266, puis du deuxième joint torique d'étanchéité 268. Une étanchéité dite radiale est ainsi obtenue entre les corps mâle 102 et femelle 202, entre une surface radiale interne du corps 202 constituant le fond du logement 270 et une surface radiale externe du corps 102, via le joint d'étanchéité 266, et entre une surface radiale interne du corps 202 constituant le fond du logement 272 et la surface radiale externe 102S du corps 102, via le joint d'étanchéité 268.

En poursuivant le mouvement d'emmanchement, la collerette 130 parvient en regard, le long de l'axe X10, des billes 242. On est alors dans les configurations des figures 5 à 7 où la collerette 130 repousse radialement les billes 242, dans une direction centrifuge à l'axe X10, à l'encontre de l'effort E1, ce qui est possible compte tenu du caractère élastiquement déformable de la bague 246 qui se déforme alors de façon centrifuge à l'axe X10. Les billes 242 sont ainsi repoussées, tout en restant en prise dans les logements 240, le long de l'axe A240, dans une position radiale externe, où les billes 242 dépassent dans la rainure 248, pour augmenter temporairement la valeur du diamètre $\Phi 6$ et libérer un passage suffisant pour le corps mâle 102 avec la collerette 130 dans le corps femelle 202. Dans cette configuration, les billes 242 agissent radialement sur la bague 246, par contact direct, et la bague élastiquement déformable 246 adopte une configuration élargie ou dilatée radialement, dans laquelle le diamètre intérieur de la bague 246 s'agrandit par rapport au diamètre intérieur de la bague 246 en configuration désaccouplée de l'élément femelle 200, permettant le déplacement centrifuge des billes de verrouillage 242 le long de l'axe A240.

Entre la configuration désaccouplée des figures 3 et 4 et la configuration en cours d'emmanchement des figures 5 à 7 où la bague 246 est en contact avec les billes 242 en position radiale externe, la bague élastiquement déformable 246 reste engagée dans la rainure périphérique externe 248, en étant partiellement disposée dans cette rainure 248, ce qui implique qu'elle demeure guidée et retenue axialement par les bords axiaux de cette rainure.

La bague est déformée en contact direct avec les billes 242 dans toutes les configurations de l'élément femelle 200.

Dans cette configuration des figures 5 à 7, l'extrémité 112B de la tige 112 vient en appui contre la surface 274, ce qui force la tige 112 à reculer à l'intérieur du corps 102 jusqu'à ce que son extrémité 112A vienne en contact avec la tête 118A de la soupape 118. On note d2 la distance axiale, mesurée parallèlement de l'axe X10 dans la configuration des figures 5 à 7, lorsque l'extrémité arrière 112A de la tige 112 vient en contact de la tête 118A de la soupape 118 sans la décoller de son siège 122, entre l'extrémité avant 102I de la surface radiale externe 102S du corps mâle 102, au niveau de la face avant 106 de l'élément mâle 100, et l'extrémité 112B de la tige 112. La distance axiale d1 est supérieure à la distance axiale d2. Il en résulte que, lors de l'emmanchement, l'étanchéité entre les éléments mâle et femelle du coupe-circuit 10, au niveau de la surface radiale externe 102S du corps mâle 102, et via le joint d'étanchéité 268, est réalisée, avant que la soupape 118 ne soit manœuvrée à l'ouverture, c'est-à-dire écartée de son siège 122, par la tige 112. Lorsque la soupape 118 est manœuvrée à l'ouverture, l'étanchéité entre la surface radiale externe de diamètre Φ3 du corps mâle 102 et le corps femelle 202 du coupe-circuit 10 au niveau du joint d'étanchéité 266 est également effective.

Pour faciliter l'emmanchement des éléments mâle et femelle 100 et 200 l'un dans l'autre, une gorge périphérique externe 176 est prévue sur le corps mâle 102, alors que le corps femelle 202 est pourvu de deux rainures inclinées 276 dont une seule est visible à la figure 8 mais qui sont toutes les deux visibles en coupe à la figure 6. Ces deux rainures inclinées 276, qui sont en pratique ménagées sur la surface périphérique externe de la partie externe 202B du corps 202, permettent la mise en place d'un outil 300 qui comprend deux bras 302 dont les extrémités 302A s'accrochent dans les rainures 276, ainsi qu'une partie centrale coudée 304 configurée pour être engagée dans la gorge 176 en venant en appui contre un côté 176B de cette gorge délimitant celle-ci vers l'avant du corps mâle 102. Ainsi, en exerçant un effort de basculement de l'outil 300 autour des extrémités 302A dans le sens de la flèche F1 à la figure 8, il est possible d'exercer sur le côté 176B de la gorge 176 un effort axial E2 dirigé vers le corps 202 de l'élément femelle 200. L'outil 300 permet donc de démultiplier l'effort exercé par l'opérateur sur l'outil 300 en effort d'emmanchement des éléments mâle 100 et femelle 200 l'un dans l'autre.

L'utilisation de l'outil 300 n'est toutefois pas obligatoire. Cet outil peut être omis si l'opérateur est capable d'exercer un effort d'emmanchement suffisant pour repousser les billes 242 radialement dans les logements 240, à l'encontre de l'effort élastique E1 exercé par la bague 246, et pour déplacer la tige 112 vers l'intérieur du corps 202, jusqu'à décoller la soupape 118 du siège 122. Dans ce cas, les gorge et rainures 176 et 276 peuvent être omises.

Lors du mouvement d'emmanchement, le protecteur 124 vient au contact de la surface externe de la partie 202B du corps 202 en s'évasant au moyen d'une déformation élastique. Dans cette configuration, le protecteur 124 isole la rainure 248 et la bague élastiquement déformable 246 de l'extérieur, ce qui évite la pollution de ces parties par des éléments extérieurs et garantit un bon fonctionnement du coupe-circuit 10 à cet égard. Un jeu radial J1 de l'ordre de 1mm est ménagé entre la bague 246 en configuration élargie et le protecteur 124, ce qui évite que le protecteur 124 ne s'oppose à la déformation élastique centrifuge de la bague 246 lorsque les billes de verrouillage 242 se déplacent vers leur position radiale externe, au passage de l'obstacle formé par la collerette 130.

Au cours du mouvement d'emmanchement, le déplacement de la soupape 118 sous l'action de la tige 112 est guidé par la coopération de la surface radiale externe de plus grand diamètre du corps cylindrique 118 et de l'alésage 104.

Dès que la soupape 118 est décollée de son siège 122 en cours d'emmanchement, le fluide sous pression peut s'écouler à travers l'alésage 104, en traversant les passages 118C de la soupape 118 puis en circulant à l'intérieur de l'alésage 104, autour de la tige 112, jusqu'à traverser les passages radiaux 116 qui sont en partie alignés, radialement à l'axe X10, avec deux des quatre passages radiaux 256, cet alignement radial étant assuré par la coopération du doigt d'indexage 126 avec la rainure d'indexage 226 L'alésage 104 en arrière du bouchon 110, les passages 118C, les passages radiaux 116 forment un conduit interne de circulation de fluide dans le corps mâle 102. Le fluide sous pression peut alors s'écouler des passages radiaux 116 dans un espace annulaire 402 défini entre le corps mâle 102 et le corps femelle 202, cet espace annulaire 402 étant obturé axialement par les joints d'étanchéité 266 et 268 disposés de part et d'autre des passages radiaux 116 et 256 le long de l'axe X10. Ainsi, en configuration accouplée, le joint d'étanchéité 266 est disposé d'un côté des passages radiaux 116 et 256 le long de l'axe X10, tandis que le joint d'étanchéité 268 est disposé de l'autre côté des passages radiaux 116 et 256 le long de l'axe X10. A partir de l'espace annulaire 402, le fluide sous pression peut alors s'écouler vers les passages radiaux 256, puis dans l'espace annulaire 204D et dans les passages inclinés 204E. La pression du fluide arrivant par les passages inclinés 204E permet de repousser la soupape 218 à l'encontre de l'effort exercé par le ressort 220, ce qui libère le passage vers l'arrière de l'alésage 204.

Dès que la collerette 130 a dépassé axialement les billes de verrouillage 42 du fait de la poursuite du mouvement d'emmanchement, l'effort E1 exercé par la bague 246 élastiquement déformée repousse radialement les billes 242 en direction de l'axe d'emmanchement X10 le long de l'axe A240, ce qui a pour effet de repousser ces billes vers leur position radiale interne dans l'encoche de verrouillage 134. La bague 246 reprend une configuration rétractée par rapport à la configuration élargie et maintient les billes de verrouillage 242 dans l'encoche de verrouillage 134. On est alors dans la configuration accouplée des éléments 100 et 200 représentée aux figures 9 à 11. Les billes de verrouillage 242, engagées dans l'encoche 134 sous l'effort E1 de la bague élastique 246, verrouillent axialement le corps mâle avec le corps femelle, c'est-à-dire forment obstacle à un retrait du corps mâle 102 hors du corps femelle 202 par butée contre la surface 130C de la collerette 130 tant que l'effort de retrait est inférieur à l'effort nécessaire pour élargir la bague 246.

En configuration accouplée, la face avant 206 du corps 202 constitue une surface de butée axiale au corps mâle 102 dans le sens d'emmanchement, la face avant 206 coopérant avec la surface 102C du corps mâle 102, alors que les billes 242 n'ont pas de butée axiale contre le corps 102 dans le sens d'emmanchement. Ainsi, les efforts tendant à rapprocher les corps mâle 102 et femelle 202 en configuration accouplée ne sont pas encaissés par les billes 242 et ne sollicitent pas la bague élastiquement déformable 246.

Dans la configuration accouplée des figures 9 à 11 atteinte au terme de l'emmanchement des éléments mâle et femelle, le fluide sous pression peut circuler à travers le coupe-circuit 10, du tronçon de canalisation 92 vers le tronçon de canalisation 94, comme représenté par les flèches d'écoulement E à la figure 9.

On remarque à la figure 9 que, en configuration accouplée des éléments mâle 100 et femelle 200, la surface axiale 102C de l'élément mâle vient en butée contre la face avant 206 de l'élément femelle, ce qui limite la pénétration de la partie avant 102B du corps 102 en direction de la surface d'appui 274. Ainsi, dans cette configuration, il existe un jeu axial J2 entre la face avant 106 de l'élément mâle 100 et la surface 274, l'extrémité 112B de la tige 112 étant alors légèrement en saillie de la surface 106, tout en étant en appui contre la surface 274.

Dans cette configuration, les passages radiaux 116 et 256 sont complètement alignés les uns avec les autres, le long de l'axe d'emmanchement X10.

Dès que le fluide sous pression traverse le coupe-circuit 10, du tronçon de canalisation 92 vers le tronçon de canalisation 94, donc notamment dans la configuration accouplée, le corps mâle 90 est équilibré, en termes de pression, vis-à-vis de l'extérieur du coupe-circuit, et ce malgré la forte pression du fluide en transit.

En effet, l'étanchéité entre la tige 112 et le corps mâle 102 est réalisée au niveau du contact d'un troisième joint torique d'étanchéité 167, ce troisième joint torique d'étanchéité étant monté axialement entre la partie rétrécie 102D et le bouchon 110. Au niveau de ce troisième joint d'étanchéité 167, la section d'étanchéité S2 entre le troisième joint d'étanchéité 167 et la tige 112 s'exprime sous la forme :

$$S2 = \pi \times \Phi2^2/4. \qquad \text{(Equation 3)}$$

D'autre part, l'étanchéité est également obtenue au niveau du contact des joints 266 et 268 avec la surface périphérique externe de la partie avant 102B du corps 102.

Au niveau du premier joint d'étanchéité 266, la section d'étanchéité S3 entre le premier joint d'étanchéité 266 et le corps mâle 102 s'exprime sous la forme :

$$S3 = \pi \times \Phi3^2/4 \qquad \text{(Equation 4)}$$

Au niveau du deuxième joint d'étanchéité 268, section d'étanchéité S4 entre le deuxième joint d'étanchéité 268 et le corps mâle 102 s'exprime sous la forme :

$$S4 = \pi \times \Phi4^2/4 \qquad \text{(Equation 5)}$$

Compte tenu de la relation exprimée par l'équation 1, on a la relation :

$$S4 = S2 + S3. \qquad \text{(Equation 6)}$$

En d'autres termes, il n'est pas exercé d'effort d'éloignement du corps 102 par rapport au corps 202, dû à la pression du fluide sous pression qui traverse le corps mais qui ne s'exerce pas à l'extérieur du coupe-circuit. L'effort élastique exercé par le ressort 120 tend à cet éloignement, mais cet effort élastique n'est pas dépendant de la pression du fluide sous pression et peut être calibré par un choix judicieux du ressort 120.

La tige 112, le bouchon 110 et le troisième joint d'étanchéité 167 obturent l'alésage central 104 sur l'avant du corps mâle 102 dans la direction de l'axe longitudinal X1. Autrement dit, la tige 112, le bouchon 110 et le troisième joint d'étanchéité 167 obturent l'extrémité axiale avant 104B de l'alésage central 104.

En cas d'effort modéré de séparation des éléments mâle 100 et femelle 200 le long de l'axe X10, la collerette 130 ne parvient pas à déformer la bague 246 et les billes 242 restent engagées dans l'encoche de verrouillage 134 et le coupe-circuit résiste à cet effort.

Dans le cas où le véhicule 8 vient à être déplacé, alors que les parties 62 et 64 du raccord 6 sont accouplées, il se produit un désaccouplement d'urgence des éléments mâle 100 et femelle 200. Les tronçons de canalisation 92 et 94 sont d'abord tendus et l'élément mâle 100 parvient à une distance maximale de la borne 4. A partir cet instant, un effort d'arrachement E3 s'exerce entre les éléments mâle et femelle du raccord, parallèlement à l'axe X10. Cet effort d'arrachement E3 a pour effet d'amener les billes de verrouillage 242 au contact de la collerette 130. S'il est suffisamment intense, c'est-à-dire s'il permet à la bague 246 de se déformer, cet effort d'arrachement E3 a pour effet de faire glisser ou rouler les billes 242 contre la surface tronconique 130C de la collerette 130 orientée vers la surface 102C, ce qui a pour effet de repousser les billes 242 dans une direction centrifuge à l'axe X10, à l'intérieur du logement 240 le long de l'axe A240. A cette occasion, la bague 246 se déforme élastiquement, radialement vers l'extérieur c'est-à-dire selon une direction centrifuge par rapport à l'axe X10, pour accommoder ce déplacement des billes 242 de leur première position radiale interne à l'intérieur de l'encoche de verrouillage 134 vers une deuxième position radiale externe en appui sur la surface périphérique externe 130A de la collerette 130 et compatible avec le retrait de l'élément mâle par rapport à l'élément femelle. Dans ce cas, l'effort d'arrachement E3 permet de séparer les éléments mâle et femelle 100 et 200 l'un de l'autre, sans rupture des tronçons de canalisation 92 et 94.

Lors de ce mouvement de séparation, la surface d'appui 274 s'écarte progressivement de la face avant 106, ce qui permet à la tige 112 de coulisser vers la droite de la figure 9, en étant repoussée par la soupape 118 soumise à l'action du ressort 120. En d'autres termes, lors du retrait du corps 102 par rapport au corps 202, la soupape de l'élément mâle est progressivement refermée, ce qui coupe la circulation de fluide au sein de l'installation 2. Lorsque la circulation de fluide sous pression est coupée dans l'élément mâle, la soupape 218 se referme sous l'effet du ressort 220.

Par ailleurs, un clapet anti-retour non représenté est intégré au tronçon de canalisation 94 ou au pistolet 162, afin d'éviter une remontée de fluide sous pression à partir du réservoir 82. En cas de désaccouplement d'urgence des éléments mâle 100 et femelle 200 envisagé ci-dessus, la portion de la canalisation 9 comprise entre ce clapet anti-retour et la soupape 218 de l'élément femelle 200 se purge à travers un conduit d'échappement 278 qui relie la partie élargie 204C de l'alésage 204 avec un évent 280 ménagé dans la partie interne 202A du corps 202, cet évent 280 reliant le conduit d'échappement 278 à la surface 274 qui communique avec l'extérieur du corps 202 lorsque l'élément femelle est désaccouplé et à un volume arrière V202 du corps 202 en communication avec l'extérieur du corps 202. Cet évent permet également d'évacuer l'air emprisonné entre les surfaces 106 et 274 lors de l'emmanchement des éléments mâle 100 et femelle 200 l'un dans l'autre.

Lorsqu'un opérateur souhaite désaccoupler les éléments mâle 100 et femelle 200 du coupe-circuit 10, notamment pour une opération de maintenance, il doit exercer sur les corps mâle et femelle 102 et 202 un effort d'écartement suffisant, parallèle à l'effort E3 mentionné ci-dessus, pour permettre aux billes de verrouillage 242 de dilater radialement, de façon centrifuge par rapport à l'axe d'emmanchement X10, la bague élastiquement déformable 246. En d'autres termes, le désaccouplement initié par un opérateur a lieu selon une séquence comparable au désaccouplement d'urgence envisagé ci-dessus. Lorsque l'élément mâle 100 est hors de l'élément femelle 200, la bague 246 repousse les billes 242 en position radiale interne.

Selon un aspect avantageux mais non représenté de l'invention, on peut prévoir un outil qui vient s'engager dans une rainure externe du corps femelle et dans une gorge externe du corps mâle, notamment les volumes 176 et 276, afin de décupler l'effort exercé dans ce cas par l'opérateur pour l'éloignement relatif des deux corps mâle 102 et femelle 202 le long de l'axe X10.

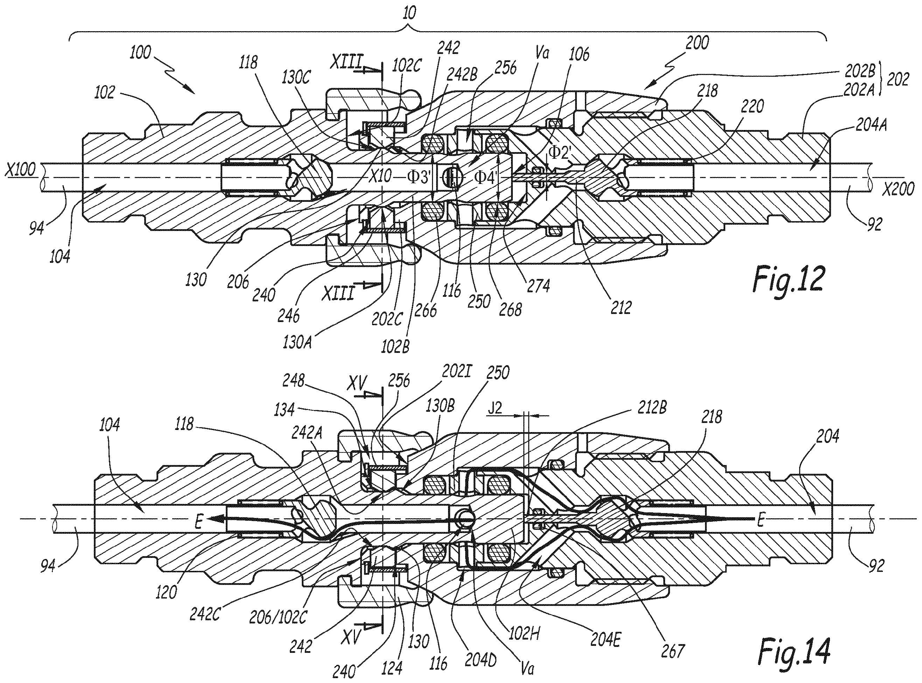

Dans le deuxième mode de réalisation de l'invention représenté aux figures 12 à 15, les parties du coupe-circuit 10 analogues à celles du premier mode de réalisation portent les mêmes références. Ce coupe-circuit peut être intégré à l'installation des figures 1 à 11.

Dans ce qui suit, on décrit principalement ce qui distingue ce mode de réalisation du précédent.

Dans ce mode de réalisation, c'est l'élément femelle 200 qui est relié à la borne 4, alors que l'élément mâle 100 est relié au pistolet 62. Les tronçons de canalisation amont 92 et aval 94 sont donc respectivement reliés à l'élément femelle 200 et à l'élément mâle 100. L'alésage 204 traverse la partie interne 202A du corps 202 de part en part le long de l'axe X200.

Le corps 202 de l'élément femelle 200 définit un volume Va d'accueil du corps 102 de l'élément mâle en configuration accouplée de ces éléments.

La soupape 218 de l'élément femelle est monobloc avec une tige 212 qui traverse la partie interne 202A du corps 202 et la surface axiale 274, et l'extrémité avant 212B de la tige 212 fait saillie au-delà de la surface axiale 274 du corps 202 définie comme dans le premier mode de réalisation, en configuration désaccouplée et en configuration accouplée du coupe-circuit. Un joint 267 est monté dans la partie interne 202A du corps 202, entre deux parties rétrécies de ce corps et réalise une surface d'étanchéité autour d'une portion de la tige 212 dont on note $\Phi 2'$ le diamètre.

Par ailleurs, la partie avant 102B du corps 102 est à section circulaire et présente deux diamètres $\Phi 3'$ et $\Phi 4'$, respectivement en arrière et en avant de deux passages radiaux 116 coaxiaux qui relient un alésage central 104 de l'élément mâle 100 à l'extérieur de celui-ci en configuration désaccouplée. L'extrémité avant de l'alésage central 104 est obturée sur l'avant du corps mâle 102, par une tête pleine 102H du corps mâle 102.

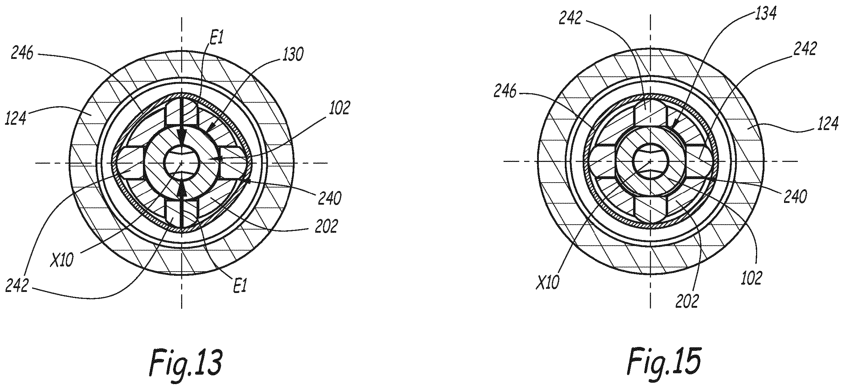

En configuration accouplée du coupe-circuit 10 représenté aux figures 14 et 15, un premier joint d'étanchéité 266 et un deuxième joint d'étanchéité 268 sont en appui étanche contre les portions de la partie avant 102B du corps 102 de diamètre $\Phi 3'$, respectivement $\Phi 4'$.

On note respectivement S2 la section d'étanchéité entre le joint d'étanchéité 267 et la tige 212, S3 la section d'étanchéité entre le joint d'étanchéité 266 et le corps mâle 102 et S4 la section d'étanchéité entre le joint d'étanchéité 268 et le corps mâle 102, ces sections s'exprimant en fonction des diamètres Φ2', Φ3' et Φ4' par transposition des équations 3, 4 et 5.

Comme dans le premier mode de réalisation, on a les relations :

$$\Phi2'^2 + \Phi3'^2 = \Phi4'^2 \qquad \text{(Equation 7)}$$

$$S4 = S2 + S3 \qquad \text{(Equation 8)}$$

Ainsi, en configuration accouplée du coupe-circuit 10, le corps 102 de l'élément de raccord 100 est équilibré vis-à-vis de l'extérieur du coupe-circuit 10 malgré la pression du fluide transitant dans le corps 102.

Dans ce mode de réalisation, la collerette 130 n'est pas constituée par une pièce rapportée mais par une portion de la partie avant 102B du corps 102 qui est monobloc avec cette partie avant. Comme la collerette 130 du premier mode de réalisation, la collerette 130 de ce deuxième mode de réalisation comprend une surface périphérique externe 130A cylindrique à section circulaire ainsi que deux surfaces en tronc de cône 130B et 130C.

Les organes de verrouillage sont constitués par quatre segments de verrouillage 242 régulièrement répartis autour de l'axe X10 et soumis à un effort élastique et centripète E1 exercé par une bague élastiquement déformable 246 qui s'étend sur 360° autour d'une portion avant 202C de la partie externe 202B du corps 202.

Les logements 240 des segments de verrouillage 242 dans le corps 202 s'étendent selon une direction radiale à l'axe longitudinal X2.

En coupe dans un plan radial à l'axe d'emmanchement X10, les segments de verrouillage 242 ont une section polygonale avec un bord radial interne 242A parallèle à l'axe X10 et deux bords inclinés arrière 242B et avant 242C respectivement parallèles ou presque parallèles aux surfaces 130B et 130C. Ceci facilite le glissement des segments 242 sur la collerette, respectivement lors de l'emmanchement et lors du désaccouplement des éléments mâle 100 et femelle 200.

La bague 246 est continue, c'est-à-dire qu'elle est annulaire et entoure les segments 242 sur 360° autour des axes X200 et X10.

La géométrie continue de la bague 246 impose de la monter par l'avant du corps femelle 202. Au lieu d'une rainure telle que la rainure 248 du premier mode de réalisation, on utilise un segment d'arrêt 232 qui limite les déplacements axiaux de la bague 246 par rapport au corps 202, en coopération avec un épaulement 202I du corps 202. Le segment d'arrêt 232 et l'épaulement 202I constituent les deux bords axiaux d'une rainure 248 ménagée au niveau de la surface radiale externe du corps 202 et qui retient axialement la bague 246 par rapport au corps femelle 202 entre la configuration élargie et la configuration rétractée de la bague 246.

En cours d'emmanchement, la face avant 106 du corps de l'élément mâle 100, qui est en forme de disque perpendiculaire à et centré sur l'axe d'emmanchement X10, entre en contact avec l'extrémité avant 212B de la tige 212 après que l'étanchéité soit effective entre les corps mâle 102 et femelle 202, au niveau des joints d'étanchéité 266 et 268.

La face avant 106 exerce ensuite un effort qui repousse la soupape 218 à l'encontre d'un effort élastique exercé par un ressort 220. Ceci permet d'ouvrir la soupape 218 et autorise la circulation de fluide sous pression de la partie arrière 204A d'un alésage central 204 du corps 202, jusque dans des passages inclinés 204E, dans un espace annulaire 204D, qui appartiennent tous deux à l'alésage central 204, puis dans des passages radiaux 256 d'une bague de butée 250, dans les passages radiaux 116 et dans l'alésage central 104 du corps 102 de l'élément mâle 100. La pression du fluide arrivant à travers les passages radiaux 116 est suffisante pour repousser la soupape 118 à l'encontre d'un effort élastique exercé par un ressort 120. Ceci permet d'établir la circulation de fluide à l'intérieur du coupe-circuit 10, comme représenté par les flèches d'écoulement E à la figure 14.

En termes d'emmanchement et de désaccouplement, le fonctionnement du coupe-circuit 10 de ce deuxième mode de réalisation est comparable à celui du premier mode de réalisation. A l'emmanchement, la collerette 130 repousse les segments de verrouillage 242 à l'encontre de l'effort élastique E1 exercé par la bague élastiquement déformable 246, en déformant la bague 246 de façon centrifuge à l'axe X10, comme représenté aux figures 12 et 13, jusqu'à sa configuration élargie. Les segments de verrouillage 242 sont ensuite repoussés par la bague 246 dans l'encoche de verrouillage 134. Lors d'un désaccouplement d'urgence, l'effort de retrait fait que les segments de verrouillage 242 sont déplacés axialement, jusqu'autour de la collerette 130 en déformant la bague 246 qui s'élargit alors radialement de façon centrifuge par rapport à l'axe d'emmanchement X10, jusqu'à ce que les segments de verrouillage 242 sortent de l'encoche de verrouillage 234 et libèrent ainsi le corps 102 de l'élément mâle 100 vis-à-vis du corps 202 de l'élément femelle 202.

Dans la configuration accouplée des figures 14 et 15, la face avant 206 du corps 202 vient en appui contre une surface axiale 102C du corps 102, définie comme dans le premier mode de réalisation, sans que la face avant 106 de l'élément mâle 100 vienne en appui contre la surface 274. Il demeure donc un jeu axial J2 entre les surfaces 106 et 274 en configuration accouplée.

Dans ce mode de réalisation, la tige d'actionnement 212 est monobloc avec la soupape 218. Tel pourrait également être le cas pour la tige d'actionnement 112 et la soupape 118 du premier mode de réalisation.

Les avantages de la présente invention sont nombreux.

La déformation radiale élastique de la bague élastique 246 entre la configuration élargie en contact avec les organes de verrouillage en position radiale interne et la configuration rétractée en contact avec les organes de verrouillage en position radiale externe permet, d'une part, un verrouillage automatique des éléments mâle et femelle du coupe-circuit 10, grâce à une manœuvre essentiellement axiale lors de l'emmanchement, et un déverrouillage automatique de ces éléments, que ce verrouillage soit d'urgence ou volontaire, également grâce à une manœuvre essentiellement axiale.

Le coupe-circuit 10 est compact, notamment selon une direction parallèle à l'axe X10.

Le type de verrouillage obtenu est compatible avec les hautes pressions utilisées dans les installations de manutention de fluide sous pression puisque le corps mâle 102 a deux sections d'étanchéité S3 et S4, de part et d'autre des passages radiaux du fluide, 116 et 256, ce qui permet de diminuer les effets de la pression sur le corps mâle 102.

Lors de l'emmanchement et du désaccouplement des éléments mâle et femelle, ainsi qu'en configuration accouplée, le corps mâle 102 traversé par le fluide sous pression peut être équilibré, comme cela ressort de la relation entre les sections d'étanchéité S2, S3 et S4 mentionnés aux équations 6 et 8.

L'étanchéité est prise au niveau des premier et deuxième joints 266 et 268 avant l'ouverture de la soupape 118 et avant le verrouillage des éléments mâle et femelle l'un dans l'autre. Ainsi, dès que le fluide circule dans le corps male 102 et dès que le verrouillage est mis en place, la pression du fluide n'impacte pas l'effort de verrouillage qui est compatible avec une manœuvre axiale. Ceci vaut pour les deux modes de réalisation. Dans le premier mode de réalisation, en cours de distribution de fluide, de la borne 4 vers le pistolet 62, le corps mâle 102 est équilibré et la pression n'exerce pas d'effort de déverrouillage sur les organes de verrouillage 242. En particulier, l'effort de désaccouplement est indépendant de la pression du fluide transitant à travers le coupe-circuit 10, ce qui fiabilise le fonctionnement de ce coupe-circuit.

Le protecteur 124 protège la bague élastique 248 en configuration accouplée, ce qui limite les risques que des poussières gênent la déformation radiale de la bague élastique 246 et le fonctionnement du coupe-circuit.

La tige d'actionnement 112 ou 212 remplace avantageusement le manchon de EP-A-0 900 966.

Dans le cas où la tige d'actionnement 112 est séparée de la soupape 118, le fonctionnement du coupe-circuit est fiabilisé car on évite un empilement de tolérances ou un coincement de la soupape 118.

Quel que soit le mode de réalisation, l'extrémité avant 112B ou 212B de la tige d'actionnement reste en permanence à l'extérieur du corps 102 ou 202. En particulier, l'extrémité avant 112B ou 212B reste en permanence à l'avant d'une surface axiale du corps 102 formée par la face avant 110B du bouchon 110 dans le premier mode de réalisation ou par la surface axiale 274 du corps 202 dans le deuxième mode de réalisation, surface axiale que la tige traverse, ce qui évite de gêner le centrage radial du corps mâle 102 dans les deux joints d'étanchéité 266 et 268.

Dans le premier mode de réalisation, la bague fendue 246 permet un montage facile des billes 242 dans leurs logements respectifs 240, ainsi qu'un montage facile de cette bague fendue sur le corps femelle 202. Comme la bague fendue peut être choisie dans un matériau plus dur qu'un simple anneau élastique, sa durée de vie peut être augmentée.

Toujours dans le premier mode de réalisation, les billes 242 ont une géométrie qui limite les risques de coincement, ce qui garantit un bon fonctionnement du coupe-circuit. Le caractère incliné des logements 240 de ce premier mode de réalisation permet de différencier l'effort de séparation E3, qui résulte dans un désaccouplement d'urgence, de l'effort de verrouillage. L'effort de verrouillage peut être inférieur à l'effort de désaccouplement d'urgence et à l'effort de déverrouillage.

Dans le premier mode de réalisation, comme les diamètres Φ3 et Φ4 sont strictement inférieurs au diamètre Φ6 des billes en position radiale interne et comme la collerette 130, qui est rapportée sur le corps 102 peut être réalisée dans un matériau adapté, les billes sont uniquement en contact avec la collerette 130 lors des manœuvres d'accouplement/désaccouplement, ce qui évite que les surfaces d'étanchéité prévues sur le corps mâle 102 ne soient abimées par le frottement des billes 242.

Dans le premier mode de réalisation, la prise en compte de l'étanchéité de la tige au niveau du joint 167 pour équilibrer le corps mâle 102 permet de garantir un effort de désaccouplement lié uniquement à l'effort de traction exercé sur les éléments mâle et femelle 100 et 200 du coupe-circuit 10 et d'éviter les désaccouplements intempestifs.

La géométrie des joints 266 et 268 et de leur logement 270 et 272, notamment les valeurs des rapports Φ8, Φ9, P270/Φ9 et P272/Φ9, évite l'éjection de ces joints sous pression, à l'emmanchement ou lors du désaccouplement. Ceci vaut pour les deux modes de réalisation.

La partie du coupe-circuit 10 qui est équipée de la tige d'actionnement, à savoir l'élément mâle 100 dans le premier mode de réalisation et l'élément femelle 200 dans le deuxième mode de réalisation, est de préférence placée du côté de la source de fluide sous pression, c'est-à-dire du côté amont par rapport au sens de circulation du fluide sous pression car, comme cette tige fait saillie hors du corps qu'elle traverse, cette tige est relativement fragile et pourrait être altérée si cet élément était traîné à terre par un véhicule. Dans le premier mode de réalisation, les surfaces d'étanchéité sur le corps 102, non protégées, ne sont pas traînées à terre par un véhicule lors du désaccouplement d'urgence et les surfaces sensibles de l'élément femelle 200 sont protégées lors du désaccouplement car elles sont situées plutôt à l'intérieur du corps 202.

En variante les passages 116 et 256 décrits comme s'étendant radialement peuvent être transversaux à l'axe longitudinal X100, respectivement X200.

Les caractéristiques des modes de réalisation et variantes envisagés ci-dessus peuvent être combinées entre elles pour générer de nouveaux modes de réalisation de l'invention et selon l'objet des revendications sous-citées.

L'invention est décrite ci-dessus en référence à une installation de fourniture d'hydrogène sous pression pour un véhicule automobile. Il est cependant entendu que d'autres applications peuvent être envisagées pour le coupe-circuit de l'invention, notamment le transfert gazeux d'hélium sous pression.

## Revendications

1. Coupe-circuit (10) pour le raccordement de deux tronçons (92, 94) de canalisation (9) d'une installation (2) de manutention de fluide sous pression, ce coupe-circuit comprenant un élément mâle (100) et un élément femelle (200) destinés à s'emmancher l'un dans l'autre selon un axe d'emmanchement (X10),

   l'élément mâle comprenant un corps mâle (102) définissant un premier conduit interne (104) de circulation de fluide sous pression et pourvu

      - d'au moins un organe (110, 112, 167 ; 102H) d'obturation d'une extrémité avant (104B) du premier conduit interne le long de l'axe d'emmanchement (X10),
      - d'au moins un premier passage (116), radial à l'axe d'emmanchement (X10) et reliant le premier conduit interne (104) à l'extérieur du corps mâle, en configuration désaccouplée des éléments mâle et femelle du coupe-circuit,
      - d'une soupape (118) mobile dans le premier conduit interne et
      - d'une encoche de verrouillage (134) ménagée sur le corps mâle l'élément femelle comprenant un corps femelle (202) définissant un deuxième conduit interne (204A) de circulation de fluide sous pression et pourvu
      - d'au moins un deuxième passage (256), radial à l'axe d'emmanchement (X10) et reliant le deuxième conduit interne (204A) à un volume d'accueil (Va) du corps mâle (102) dans le corps femelle,
      - d'une soupape (218) mobile dans le deuxième conduit interne,
      - de plusieurs organes de verrouillage (242) mobiles transversalement à l'axe d'emmanchement, dans des logements (240) du corps femelle, entre une première position radiale où les organes de verrouillage sont engagés dans l'encoche de verrouillage (134), pour le verrouillage axial du corps mâle (102) avec le corps femelle (202) en configuration accouplée des éléments mâle (100) et femelle (200) du coupe-circuit (10), et une deuxième position radiale, où les organes de verrouillage libèrent le passage du corps mâle dans le corps femelle,

   dans lequel, en configuration accouplée, les premier et deuxième passages radiaux (116, 256) sont en communication, alors qu'un premier joint d'étanchéité (266) et un deuxième joint d'étanchéité (268) sont disposés, le long de l'axe d'emmanchement (X10), de part et d'autre des premier et deuxième passages radiaux (116, 256), et coopèrent respectivement radialement avec les corps mâle et femelle, **caractérisé en ce qu'**une bague (246) de rappel élastique est montée sur le corps femelle (202) et entoure les organes de verrouillage (242), cette bague étant configurée pour rappeler élastiquement les organes de verrouillage vers leur première position radiale en configuration accouplée et pour être déformée radialement, et élastiquement par les organes de verrouillage lors de leur déplacement, de leur première position radiale vers leur deuxième position radiale.

2. Coupe-circuit selon la revendication 1, **caractérisé en ce qu'**il comprend une tige (112 ; 212) de manœuvre d'une première soupape (118 ; 218) parmi la soupape (118) de l'élément mâle et la soupape (218) de l'élément femelle, cette tige traversant un premier corps, formé par le corps mâle (102) ou le corps femelle (202) et logeant la première soupape, avec interposition d'un troisième joint d'étanchéité (167 ; 267) entre le premier corps et la tige, et étant montée coulissante dans le premier corps selon une direction parallèle à l'axe d'emmanchement (X10), et **en ce que** le deuxième corps (202, 102), parmi le corps mâle et le corps femelle, définit une surface (274, 106) d'appui de la tige, configurée pour pousser la tige vers l'arrière du premier corps, en cours d'emmanchement des éléments mâle (100) et femelle (200), pour déplacer la première soupape d'une position de fermeture à une position d'ouverture du conduit interne du premier corps.

3.  Coupe-circuit selon la revendication 2, **caractérisé en ce que** la tige (112) est distincte de la première soupape (118) qu'elle manœuvre.

4.  Coupe-circuit selon l'une des revendications 2 ou 3, **caractérisé en ce que**, en configuration désaccouplée et en configuration accouplée du coupe-circuit, l'extrémité avant (112B, 212B) de la tige (112, 212) s'étend, selon l'axe d'emmanchement (X10), vers l'avant au-delà d'une surface (106, 274) du premier corps que la tige (112) traverse.

5.  Coupe-circuit selon l'une des revendications 2 à 4, **caractérisé en ce que**, en configuration accouplée, le premier joint d'étanchéité (266) est disposé plus à l'avant du corps femelle (202) que le deuxième joint d'étanchéité (268), alors qu'une section d'étanchéité (S4) entre le deuxième joint d'étanchéité (268) et le corps mâle (102) est égale à la somme d'une section d'étanchéité (S3) entre le premier joint d'étanchéité (266) et le corps mâle et d'une section d'étanchéité (S2) entre le troisième joint (167 ; 267) d'étanchéité et la tige (112 ; 212).

6.  Coupe-circuit selon l'une des revendications 2 à 5, **caractérisé en ce que** le premier joint d'étanchéité (266) et le deuxième joint d'étanchéité (68) sont chacun reçus dans une gorge périphérique interne (270, 272) du corps femelle et **en ce que** la tige (112) actionne la soupape (118) de l'élément mâle (100).

7.  Coupe-circuit selon la revendication 6, **caractérisé en ce qu'**une première distance (d1), mesurée axialement entre la surface d'appui (274) et le joint (268) le plus proche de cette surface, parmi le premier joint (266) d'étanchéité et le deuxième joint (268) d'étanchéité, est supérieure à une deuxième distance (d2), mesurée axialement entre l'extrémité avant (102l) de la surface radiale externe (102S) du corps mâle (102) et l'extrémité avant (112B) de la tige (112), lorsque la tige est en contact avec la soupape (118) de l'élément mâle (100) sans la séparer de son siège (122).

8.  Coupe-circuit selon l'une des revendications précédentes, **caractérisé en ce que** le premier joint d'étanchéité (266) et le deuxième joint d'étanchéité (268) sont des joints toriques et **en ce que**, pour chacun des premier et deuxième joints d'étanchéité, le rapport entre, d'une part, le diamètre intérieur ($\Phi$8) de ce joint en configuration désaccouplée du coupe-circuit et, d'autre part, le diamètre de tore ($\Phi$9) de ce joint est inférieur à 2,5, de préférence à 2,2.

9.  Coupe-circuit selon l'une des revendications précédentes, **caractérisé en ce que**, entre une première configuration (Fig 2 ; Fig12) de la bague de rappel élastique (246) en contact avec les organes de verrouillage (242) dans leur première position radiale et une deuxième configuration (Fig 3 ; fig 10) de la bague de rappel élastique (246) en contact avec les organes de verrouillage dans leur deuxième position radiale, la bague de rappel élastique (246) est retenue axialement dans une rainure (248) ménagée au niveau de la surface radiale externe du corps femelle (202) et délimitée par deux bords axiaux.

10. Coupe-circuit selon l'une des revendications précédentes, **caractérisé en ce que** la bague de rappel élastique (246) est une bague fendue qui agit sur deux organes de verrouillage (242) mobiles dans deux logements (240) symétriques par rapport à l'axe d'emmanchement (X10).

11. Coupe- circuit selon l'une des revendications précédentes, **caractérisé en ce que** les organes de verrouillage sont des billes de verrouillage (242).

12. Coupe-circuit selon l'une des revendications précédentes, **caractérisé en ce que** les organes de verrouillage (242) sont reçus dans des logements (240) centrés chacun sur un axe transversal (A240) à l'axe d'emmanchement (X10), **en ce que** les axes transversaux (A240) des logements (240) convergent en direction de l'avant du corps femelle (202) et **en ce qu'**un angle ($\alpha$240) entre l'axe d'emmanchement (X10) et l'axe transversal (A240) de chaque logement (240), mesuré du côté arrière du logement (240), est compris entre 60° et 80°, de préférence égal à 70°.

13. Coupe-circuit selon l'une des revendications précédentes, **caractérisé en ce que** l'encoche de verrouillage (134) est délimitée le long de l'axe d'emmanchement (X10), du côté de la face avant (106) de l'élément mâle (100), par une première surface tronconique (130C) d'une collerette (130), et **en ce que** l'angle d'inclinaison ($\gamma$130C) de la première surface tronconique (130C) par rapport à l'axe d'emmanchement (X10), mesuré hors de la collerette, est compris entre 140° et 160°, de préférence égal à 150°.

14. Coupe-circuit selon l'une des revendications précédentes, **caractérisé en ce que**, en configuration accouplée des éléments mâle (100) et femelle (200), le corps femelle (202) constitue une surface (206) de butée axiale au corps mâle (102), dans le sens d'emmanchement.

15. Installation de manutention de fluide sous pression comprenant une source (4) de fluide sous pression et une première partie (62) d'un raccord (6) destinée à être accouplée à une deuxième partie (64) de raccord reliée à un volume (82) de stockage ou d'utilisation du fluide, la première partie (62) du raccord étant reliée fluidiquement à la source par une canalisation (9), **caractérisée en ce qu'**un coupe-circuit (10) selon l'une des revendications précédentes est relié fluidiquement à la source (4) par un premier tronçon (92) de la canalisation et à la première partie (62) du raccord (6) par un deuxième tronçon (94) de la canalisation.

**Patentansprüche**

1. Unterbrechungsvorrichtung (10) für den Anschluss von zwei Abschnitten (92, 94) einer Rohrleitung (9) einer Anlage (2) zur Förderung von unter Druck stehendem Fluid, wobei diese Unterbrechungsvorrichtung ein Einsteckelement (100) und ein Aufnahmeelement (200) umfasst, die dazu bestimmt sind, gemäß einer Eingreifachse (X10) ineinandergesteckt zu werden,

wobei das Einsteckelement einen Einsteckkörper (102) umfasst, der einen ersten Innenkanal (104) für eine unter Druck stehende Fluidströmung definiert und mit

- mindestens einem Element (110, 112, 167; 102H) zum Verschließen eines vorderen Endes (104B) des ersten Innenkanals gemäß der Eingreifachse (X10),
- mindestens einem ersten Durchgang (116), der radial zur Eingreifachse (X10) verläuft und den ersten Innenkanal (104) im entkuppelten Zustand der Einsteck- und Aufnahmeelemente der Unterbrechungsvorrichtung mit dem Außenraum des Einsteckkörpers verbindet,
- einem Ventil (118), das in dem ersten Innenkanal beweglich ist, und
- einer Verriegelungsausnehmung (134), die am Einsteckkörper angeordnet ist, versehen ist,

wobei das Aufnahmeelement einen Aufnahmekörper (202) umfasst, der einen zweiten unter Druck stehenden Fluidströmungsinnenkanal (204A) definiert und mit

- mindestens einem zweiten Durchgang (256), der radial zur Eingreifachse (X10) verläuft und die zweite Innenleitung (204A) mit einem Volumen (Va) zu Aufnahme des Einstecckörpers (102) im Aufnahmekörper verbindet,
- einem Ventil (218), das in dem zweiten Innenkanal beweglich ist,
- einer Mehrzahl von Verriegelungselementen (242), die quer zur Einführachse in Aufnahmeräumen (240) des Aufnahmekörpers zwischen einer ersten radialen Position, in der die Verriegelungselemente in die Verriegelungsausnehmung (134) eingreifen, um den Einsteckkörper (102) mit dem Aufnahmekörper (202) in der gekuppelten Konfiguration der Einsteck- (100) und Aufnahmeelemente (200) der Unterbrechungsvorrichtung (10) axial zu verriegeln, und einer zweiten radialen Position, in der die Verriegelungselemente das Durchführen des Einsteckkörpers in den Aufnahmekörper freigeben, beweglich sind, versehen ist,

wobei in der gekuppelten Konfiguration der erste und der zweite radiale Durchgang (116, 256) in Verbindung stehen, wobei eine erste Dichtung (266) und eine zweite Dichtung (268) entlang der Einführachse (X10) auf beiden Seiten des ersten und des zweiten radialen Durchgangs (116, 256) angeordnet sind und radial mit den Einsteckund Aufnahmekörpern zusammenwirken, **dadurch gekennzeichnet, dass** ein elastischer Rückstellring (246) auf dem Aufnahmekörper (202) angebracht ist und die Verriegelungselemente (242) umgibt, wobei der Ring ausgebildet ist, die Verriegelungselemente in der gekuppelten Konfiguration elastisch in ihre erste radiale Position zurückzustellen und von den Verriegelungselementen bei ihrer Bewegung aus ihrer ersten radialen Position in ihre zweite radiale Position radial und elastisch verformt zu werden.

2. Unterbrechungsvorrichtung nach Anspruch 1, **dadurch gekennzeichnet, dass** sie einen Stab (112; 212) zur Betätigung eines ersten Ventils (118; 218) von dem Ventil (118) des Einsteckelements und dem Ventil (218) des Aufnahmeelements umfasst, wobei dieser Stab einen ersten Körper durchgreift, der von dem Einsteckkörper (102) oder dem Aufnahmekörper (202) gebildet ist und das erste Ventil aufnimmt, wobei eine dritte Dichtung (167; 267) zwischen dem ersten Körper und dem Stab angeordnet ist, und verschiebbar in dem ersten Körper in einer Richtung parallel zu der Einführachse (X10) angeordnet ist, und dass der zweite Körper (202, 102) von dem Einsteckkörper und dem Aufnahmekörper eine Auflagefläche (274, 106) für den Stab definiert, die ausgebildet ist, den Stab während des Ineinandergreifens der Einsteck-(100) und Aufnahme-(200)elemente in Richtung der Rückseite des ersten Körpers zu drücken, um das erste Ventil von einer geschlossenen Position in eine offene Position des Innenkanals des ersten Körpers zu bewegen.

3. Unterbrechungsvorrichtung nach Anspruch 2, **dadurch gekennzeichnet, dass** der Stab (112) von dem ersten Ventil (118), das er betätigt, getrennt ist.

4. Unterbrechungsvorrichtung nach einem der Ansprüche 2 oder 3, **dadurch gekennzeichnet, dass** sich das vordere Ende (112B, 212B) des Stabs (112, 212) in der entkuppelten und gekuppelten Konfiguration der Unterbrechungsvorrichtung gemäß der Einführachse (X10) nach vorne über eine Fläche (106, 274) des ersten Körpers hinaus erstreckt, die der Stab (112) durchgreift.

5. Unterbrechungsvorrichtung nach einem der Ansprüche 2 bis 4, **dadurch gekennzeichnet, dass** in der gekuppelten Konfiguration die erste Dichtung (266) weiter vorne im Aufnahmekörper (202) angeordnet ist als die zweite Dichtung (268), während ein Dichtungsabschnitt (S4) zwischen der zweiten Dichtung (268) und dem Einsteckkörper (102) gleich der Summe eines Dichtungsabschnitts (S3) zwischen der ersten Dichtung (266) und dem Einsteckkörper und eines Dichtungsabschnitts (S2) zwischen der dritten Dichtung (167; 267) und dem Stab (112; 212) ist.

6. Unterbrechungsvorrichtung nach einem der Ansprüche 2 bis 5, **dadurch gekennzeichnet, dass** die erste Dichtung (266) und die zweite Dichtung (68) jeweils in einer inneren Umfangsnut (270, 272) des Aufnahmekörpers aufgenommen sind und dass der Stab (112) das Ventil (118) des Einsteckelementes (100) betätigt.

7. Unterbrechungsvorrichtung nach Anspruch 6, **dadurch gekennzeichnet, dass** ein erster Abstand (d1), gemessen in axialer Richtung zwischen der Auflagefläche (274) und der dieser Fläche am nächsten liegenden Dichtung (268) unter der ersten Dichtung (266) und der zweiten Dichtung (268), größer ist als ein zweiter Abstand (d2), gemessen in axialer Richtung zwischen dem vorderen Ende (102I) der radialen Außenfläche (102S) des Einsteckkörpers (102) und dem vorderen Ende (112B) des Stabs (112), wenn der Stab in Kontakt mit dem Ventil (118) des Einsteckelements (100) ist, ohne es von seinem Sitz (122) zu trennen.

8. Unterbrechungsvorrichtung nach einem der vorhergehenden Ansprüche, **dadurch gekennzeichnet, dass** die erste Dichtung (266) und die zweite Dichtung (268) O-Ringe sind und dass für jede der ersten und zweiten Dichtungen das Verhältnis zwischen dem Innendurchmesser ($\Phi 8$) dieser Dichtung in der entkuppelten Konfiguration der Unterbrechungsvorrichtung einerseits und dem Torusdurchmesser ($\Phi 9$) dieser Dichtung andererseits kleiner als 2,5, vorzugsweise 2,2 ist.

9. Unterbrechungsvorrichtung nach einem der vorhergehenden Ansprüche, **dadurch gekennzeichnet, dass** zwischen einer ersten Konfiguration (Fig. 2; Fig. 12) des elastischen Rückstellrings (246) in Kontakt mit den Verriegelungselementen (242) in ihrer ersten radialen Position und einer zweiten Konfiguration (Fig. 3; Fig. 10) des elastischen Rückstellrings (246) in Kontakt mit den Verriegelungselementen in ihrer zweiten radialen Position, der elastische Rückstellring (246) axial in einer Nut (248) gehalten wird, die an der radialen Außenfläche des Aufnahmekörpers (202) vorgesehen und durch zwei axiale Ränder begrenzt ist.

10. Unterbrechungsvorrichtung nach einem der vorhergehenden Ansprüche, **dadurch gekennzeichnet, dass** der elastische Rückstellring (246) ein Spaltring ist, der auf zwei Verriegelungselemente (242) wirkt, die in zwei zur Einführachse (X10) symmetrischen Aufnahmeräumen (240) beweglich sind.

11. Unterbrechungsvorrichtung nach einem der vorhergehenden Ansprüche, **dadurch gekennzeichnet, dass** die Verriegelungselemente Verriegelungskugeln (242) sind.

12. Unterbrechungsvorrichtung nach einem der vorhergehenden Ansprüche, **dadurch gekennzeichnet, dass** die Verriegelungselemente (242) in Aufnahmeräumen (240) aufgenommen sind, die jeweils auf eine Achse (A240) quer zur Einführachse (X10) zentriert sind, dass die Querachsen (A240) der Aufnahmeräume (240) in Richtung der Vorderseite des Aufnahmekörpers (202) konvergieren und dass ein Winkel ($\alpha 240$) zwischen der Einführachse (X10) und der Querachse (A240) jedes Aufnahmeraums (240), gemessen an der Rückseite des Aufnahmeraums (240), zwischen 60° und 80° und vorzugsweise gleich 70° beträgt.

**13.** Unterbrechungsvorrichtung nach einem der vorhergehenden Ansprüche, **dadurch gekennzeichnet, dass** die Verriegelungsausnehmung (134) entlang der Einführachse (X10) auf der Seite der Vorderseite (106) des Einsteckelements (100) durch eine erste kegelstumpfförmige Fläche (130C) eines Kragens (130) begrenzt ist, und dass der Neigungswinkel ($\gamma$130C) der ersten kegelstumpfförmigen Fläche (130C) in Bezug auf die Einführachse (X10), gemessen vom Kragen weg, zwischen 140° und 160° und vorzugsweise 150° beträgt.

**14.** Unterbrechungsvorrichtung nach einem der vorhergehenden Ansprüche, **dadurch gekennzeichnet, dass** in der gekuppelten Konfiguration der Einsteck-(100) und Aufnahme-(200)elemente der Aufnahmekörper (202) eine Fläche (206) zum axialen Anschlag an den Einsteckkörper (102) in der Einführrichtung bildet.

**15.** Anlage zur Förderung von unter Druck stehendem Fluid, die eine Quelle (4) für unter Druck stehendes Fluid und einen ersten Teil (62) einer Kupplung (6) umfasst, die dazu bestimmt ist, mit einem zweiten Teil (64) der Kupplung verbunden zu werden, der mit einem Volumen (82) zur Speicherung oder Verwendung des Fluids verbunden ist, wobei der erste Teil (62) der Kupplung über eine Leitung (9) mit der Quelle in Fluidverbindung steht, **dadurch gekennzeichnet, dass** eine Unterbrechungsvorrichtung (10) nach einem der vorhergehenden Ansprüche über einen ersten Abschnitt (92) der Leitung mit der Quelle (4) und über einen zweiten Abschnitt (94) der Leitung mit dem ersten Teil (62) der Kupplung (6) in Fluidverbindung steht.


**Claims**

**1.** A circuit breaker (10) for connecting two line (9) segments (92, 94) of a facility (2) for handling pressurized fluid, the circuit breaker including a male element (100) and a female element (200) that are intended to fit in one another along a fitting axis (X10),

the male element including a male body (102) defining a first inner pipe (104) for circulating pressurized fluid and provided with

- at least one member (110, 112, 167; 102H) for closing off a front end (104B) of the first inner pipe along the fitting axis (X10),
- at least one first passage (116), radial with respect to the fitting axis (X10) and connecting the first inner pipe (104) to the outside of the male body in the uncoupled configuration of the male and female elements of the circuit breaker,
- a valve (118), movable in the first inner pipe, and
- a locking notch (134) arranged on the male body

the female element including a female body (202) defining a second inner pipe (204A) for the circulation of pressurized fluid and provided with

- at least one second passage (256), radial with respect to the fitting axis (X10) and connecting the second inner pipe (204A) to a volume (Va) receiving the male body (102) in the female body,
- a valve (218) movable in the second inner pipe,
- several locking members (242) movable transversely with respect to the fitting axis, in housings (240) of the female body, between a first radial position, where the locking members are engaged in the locking notch (134), for the axial locking of the male body (102) with the female body (202) in the coupled configuration of the male (100) and female (200) elements of the circuit breaker (10), and a second radial position, where the locking members free the passage of the male body in the female body,

wherein, in the coupled configuration, the first and second radial passages (116, 256) are in communication, while a first sealing gasket (266) and a second sealing gasket (268) are arranged, along the fitting gasket (X10), on either side of the first and second radial passages (116, 256) and respectively cooperate radially with the male and female bodies, **characterized in that** a resilient return ring (246) is mounted on the female body (202) and surrounds the locking members (242), this ring being configured to resiliently return the locking members toward their first radial position in the coupled configuration and to be deformed radially, and resiliently, by the locking members during their movement, from their first radial position toward their second radial position.

**2.** The circuit breaker according to claim 1, **characterized in that** it includes a rod (112; 212) for maneuvering a first valve (118; 218) from among the valve (118) of the male element and the valve (218) of the female element, this rod passing through a first body, formed by the male body (102) or the female body (202) and housing the first valve, with interposition of a third sealing gasket (167; 267) between the first body and the rod, and being mounted sliding in the first body along a direction parallel to the fitting axis (X10), and **in that** the second body (202, 102), from among the male body and the female body, defines a bearing surface (274, 106) of the rod, configured to push the rod toward the rear of the first body, during fitting of the male (100) and female (200) elements, to move the first valve from a closed position to an open position of the inner pipe of the first body.

3. The circuit breaker according to claim 2, **characterized in that** the rod (112) is separate from the first valve (118) that it maneuvers.

4. The circuit breaker according to one of claims 2 or 3, **characterized in that**, in the uncoupled configuration and in the coupled configuration of the circuit breaker, the front end (112B, 212B) of the rod (112, 212) extends, along the fitting axis (X10), toward the front past a surface (106, 274) of the first body that the rod (112) passes through.

5. The circuit breaker according to one of claims 2 to 4, **characterized in that**, in the coupled configuration, the first sealing gasket (266) is arranged more in front of the female body (202) than the second sealing gasket (268), while a sealing section (S4) between the second sealing gasket (268) and the male body (102) is equal to the sum of a sealing section (S3) between the first sealing gasket (266) and the male body and a sealing section (S2) between the third sealing gasket (167; 267) and the rod (112; 212).

6. The circuit breaker according to one of claims 2 to 5, **characterized in that** the first sealing gasket (266) and the second sealing gasket (68) are each received in an inner peripheral groove (270, 272) of the female body and **in that** the rod (112) actuates the valve (118) of the male element (100).

7. The circuit breaker according to claim 6, **characterized in that** a first distance (d1), measured axially between the bearing surface (274) and the gasket (268) closest to said surface, among the first sealing gasket (266) and the second sealing gasket (268) is greater than a second distance (d2), measured axially between the front end (1021) of the outer radial surface (102S) of the male body (102) and the front end (112B) of the rod (112), when the rod is in contact with the valve (118) of the male element (100) without separating it from its seat (122).

8. The circuit breaker according to one of the preceding claims, **characterized in that** the first sealing gasket (266) and the second sealing gasket (268) are O-rings, and **in that** for each of the first and second sealing gaskets, the ratio between, on the one hand, the inner diameter ($\Phi8$) of this gasket in the uncoupled configuration of the circuit breaker, and on the other hand, the diameter of the toroid ($\Phi9$) of this gasket is smaller than 2.5, preferably than 2.2.

9. The circuit breaker according to one of the preceding claims, **characterized in that**, between a first configuration (Fig. 2; Fig. 12) of the resilient return ring (246) in contact with the locking members (242) in their first radial position and a second configuration (Fig. 3; Fig. 10) of the resilient return ring (246) in contact with the locking members in their second radial position, the resilient return ring (246) is retained axially in a slot (248) arranged at the outer radial surface of the female body (202) and delimited by two axial edges.

10. The circuit breaker according to one of the preceding claims, **characterized in that** the resilient return ring (246) is a slotted ring that acts on two locking members (242) movable in two symmetrical housings (240) relative to the fitting axis (X10).

11. The circuit breaker according to one of the preceding claims, **characterized in that** the locking members are locking balls (242).

12. The circuit breaker according to one of the preceding claims, **characterized in that** the locking members (242) are received in housings (240) each centered on an axis (A240) transverse to the fitting axis (X10), **in that** the transverse axes (A240) of the housings (240) converge toward the front of the female body (202) and **in that** an angle ($\alpha240$) between the fitting axis (X10) and the transverse axis (A240) of each housing (240), measured on the rear side of the housing (240), is comprised between 60° and 80°, preferably equal to 70°.

13. The circuit breaker according to one of the preceding claims, **characterized in that** the locking notch (134) is delimited, along the fitting axis (X10), on the side of the front face (106) of the male element (100), by a first frustoconical surface (130C) of a flange (130), and **in that** the incline angle ($\gamma130C$) of the first frustoconical surface (130C) relative to the fitting axis (X10), measured outside the flange, is comprised between 140° and 160°, preferably equal to 150°.

14. The circuit breaker according to one of the preceding claims, **characterized in that**, in the coupled configuration of the male (100) and female (200) elements, the female body (202) constitutes an axial stop surface (206) for the male body (102), in the fitting direction.

15. A facility for handling pressurized fluid that includes a pressurized fluid source (4) and a first part (62) of a coupling (6) intended to be coupled to a second coupling part (64) connected to a storage or usage volume (82) of the fluid, the first part (62) of the coupling being fluidly connected to the source by a line (9), **characterized in that** a circuit breaker (10) according to one of the preceding claims is fluidly connected to the source (4) by a first segment (92) of the pipe and to the first part (62) of the coupling (6) by a second segment (94) of the pipe.

*Fig.1*

EP 3 457 016 B1

Fig.2

Fig.3

EP 3 457 016 B1

Fig.4

EP 3 457 016 B1

Fig.5

Fig.6

EP 3 457 016 B1

Fig.7

Fig.8

Fig.9

Fig.11

Fig.10

*Fig.12*

*Fig.14*

Fig.15

Fig.13

30

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0900966 A